# EUROPEAN PATENT APPLICATION

(11) **EP 4 708 831 A1**
(43) Date of publication of application: **11.03.2026**
(21) Application number: 25726599.1
(22) Date of filing: 13.05.2025
(51) Int. Cl.: H04M 1/02, G06F 1/16

(54) **CONTROL CIRCUIT REINFORCING STRUCTURE OF ELECTRONIC DEVICE, AND ELECTRONIC DEVICE COMPRISING SAME**

(30) Priority: 09.07.2024 KR 20240090677; 25.10.2024 KR 20240147678
(71) Applicant: Samsung Electronics Co., Ltd, Suwon-si, Gyeonggi-do 16677 (KR)
(72) Inventor: JUNG, Kiyoung, Suwon-si, Gyeonggi-do 16677 (KR); AN, Jungchul, Suwon-si, Gyeonggi-do 16677 (KR)
(74) Representative: Appleyard Lees IP LLP
(86) International application number: PCT/KR2025/006447
(87) International publication number: WO 2026/014690

(57) **Abstract**

An electronic device according to an embodiment of the disclosure includes a housing including a lateral member and a support member extended from the lateral member, and a display disposed in the housing. The display includes a display panel including a first area and a second area extended from the first area, disposed on a rear surface of the first area, and having an end overlapping with a flexible printed circuit board (FPCB), a control circuit disposed in the second area, a reinforcing member disposed along the end of the second area and arranged to surround at least a portion of the control circuit, and a waterproof member disposed in the second area. At least a portion of the waterproof member may be spaced apart from the end of the second area by a distance smaller than a combination of a width of the control circuit and a width of the reinforcing member. Other various embodiments are possible.

## Description

### [Technical Field]

Various embodiments disclosed in this document relate to an electronic device including a control circuit reinforcement structure.

### [Background Art]

The width of a display is decreasing in consideration of the production cost of an electronic device, and at the same time, the components of the electronic devices are improving in order to differentiate the functional points of the electronic device. The electronic device may include the display having a separate component (e.g., a digitizer) for recognizing input from a pen input device. In addition, the electronic device may require a sealed waterproof and/or dustproof structure to prevent damage to electronic components arranged in an internal space due to moisture and/or foreign substances entering from the outside.

The above information may be presented as background information only to assist with an understanding of the disclosure. No determination has been made, and no assertion is made, as to whether any of the above might be applicable as prior art with regard to the disclosure.

### [Disclosure of Invention]

### [Technical Problem]

An electronic device (e.g., a foldable display, a foldable sub display, a bar type display, etc.) may include a control circuit (a display driver IC (DDI)) used to drive a display. The control circuit may be disposed in a second area (e.g., a rear surface) that extends from a first area (e.g., a front surface or an active area) of the display and is disposed on a rear surface of the first area. Since the control circuit is disposed at a position overlapping with a support member of a housing that supports a battery, durability may be weakened. For example, since the control circuit is adjacent to the support member, it may collide with the support member and be damaged when an external impact is applied to the electronic device. Therefore, the display may include a reinforcing member to secure durability of the control circuit. For example, the reinforcing member may be disposed adjacent to the control circuit. When the display is viewed from above, the gap between the reinforcing member and the support member may be narrower than the gap between the control circuit and the support member. Therefore, when an external impact is applied to the electronic device, the reinforcing member may first contact the support member, so that the control circuit may be prevented from contacting the support member.

The electronic device may include a digitizer panel for recognizing an input from an electronic pen (e.g., a stylus). The digitizer panel may be magnetized by a folding magnet inside the electronic device (e.g., a foldable display). Accordingly, a shielding material may be mounted between the digitizer panel and the folding magnet. In addition, the electronic device may include a waterproof member.

Meanwhile, considering the production cost of the display, the width of the second area of the display may be reduced. In this case, an area where the waterproof member can be arranged between the housing and the second area of the display may be reduced. In order for the electronic device to secure a certain level of waterproof performance, the waterproof member must be arranged so that it does not overlap with components of the display. For example, the waterproof member may be disposed so as not to overlap with the reinforcing member, the control circuit, and the shielding member when the display is viewed from above. However, as the width of the second area of the display is reduced, an area where the waterproof member does not overlap with the reinforcing member, the control circuit, and the shielding member in the second may be reduced.

Therefore, if a portion of the shielding member is removed, the digitizer panel may be magnetized by the folding magnet inside the electronic device, which may cause a failure in recognition of the electronic pen. Or, if the shielding member and the waterproof member are overlapped, a gap may occur between the second area and the waterproof member, causing a problem in which moisture or foreign matters flowing in from the outside may penetrate into the electronic components placed in the internal space.

The technical problems to be solved in the disclosure are not limited to those mentioned above, and other technical problems not mentioned will be clearly understood by those with ordinary knowledge in the technical field to which the disclosure belongs from the description below.

### [Solution to Problem]

An electronic device according to an embodiment of the disclosure may include a housing including a lateral member and a support member extended from the lateral member. The electronic device according to an embodiment of the disclosure may include a display disposed in the housing. The display according to an embodiment of the disclosure may include a display panel including a first area and a second area extended from the first area, disposed on a rear surface of the first area, and having an end overlapping with a flexible printed circuit board (FPCB). The display according to an embodiment of the disclosure may include a control circuit disposed in the second area. The display according to an embodiment of the disclosure may include a reinforcing member disposed along the end of the second area and arranged to surround at least a portion of the control circuit, and a waterproof member disposed in the second area. The control circuit may be received in a notch and/or recess in the reinforcing member. At least a portion of the waterproof member may be spaced apart from the end of the second area by a distance (W3) smaller than a combination of a width of the control circuit and a width of the reinforcing member. An electronic device according to an embodiment of the disclosure may include a first housing including a first lateral member and a first support member extended from the first lateral member into an internal space. The electronic device according to an embodiment of the disclosure may include a second housing including a second lateral member and a second support member extended from the second lateral member into the internal space. The electronic device according to an embodiment of the disclosure may include a hinge device that rotatably connects the first housing and the second housing about a folding axis. The electronic device according to an embodiment of the disclosure may include a display disposed in the first housing and the second housing. The display according to an embodiment of the disclosure may include a display panel including a first area and a second area extended from the first area, disposed on a rear surface of the first area, and having an end overlapping with a flexible printed circuit board (FPCB). The display according to an embodiment of the disclosure may include a control circuit disposed in the second area. The display according to an embodiment of the disclosure may include a reinforcing member disposed along the end of the second area and arranged to surround at least a portion of the control circuit, and a waterproof member disposed in the second area. At least a portion of the waterproof member may be spaced apart from the end of the second area by a distance (W3) smaller than a combination of a width of the control circuit and a width of the reinforcing member.

### [Advantageous Effects of Invention]

According to an embodiment of the disclosure, the reinforcing member may include a first portion arranged parallel to the control circuit of the display, a second portion extended from one end of the first portion along a first direction, and a third portion extended from the other end of the first portion along a second direction opposite to the first direction. In one embodiment, the third portion may be shorter in length than the second portion. Accordingly, the electronic device may secure an additional space located in the second direction with respect to the third portion. In one embodiment, as the waterproof member is disposed in the additional space, a certain area can be secured in the second area of the display in which the waterproof member can be placed. At least a portion of the waterproof member may be spaced apart from the second area of the display by a distance less than the combined width of the control circuit and the width of the reinforcing member.

In addition, since a part of the buffer member arranged in the second area of the display protrudes and is disposed in the additional space, it is possible to compensate for the weakening of the durability of the control circuit due to the short length of the third portion of the reinforcing member. In addition, since the width of the waterproof member adjacent to the control circuit increases, it is possible to compensate for the weakening of the durability of the control circuit due to the short length of the third portion of the reinforcing member.

In addition, the shielding member may be placed between the digitizer panel of the electronic device (e.g., a foldable display) and the folding magnet to maintain the performance of the electronic pen (e.g., a stylus).

In addition, when the display is viewed from above, the waterproof member and the shielding member of the electronic device may be separated to maintain the function of the waterproof member.

### [Brief Description of Drawings]

In connection with the description of drawings, identical or similar reference numerals may be used for identical or similar components.
FIGS. 1A and 1B are views showing front and rear surfaces of an electronic device in an unfolded stage according to an embodiment of the disclosure.
FIGS. 2A and 2B are views showing front and rear surfaces of an electronic device in a folded stage according to an embodiment of the disclosure.
FIG. 3 is an exploded perspective view showing an electronic device according to an embodiment of the disclosure.
FIG. 4 is an exploded perspective view showing a first display according to an embodiment of the disclosure.
FIG. 5A is an enlarged view showing a rear structure of a display, a control circuit and its peripheral components according to an embodiment of the disclosure.
FIG. 5B is a view showing a front structure of a display according to an embodiment of the disclosure.
FIG. 6A is a cross-sectional view, taken along the line 6a-6a in FIG. 5A, schematically showing the display, the control circuit and its peripheral components according to an embodiment of the disclosure.
FIG. 6B is a cross-sectional view, taken along the line 6b-6b in FIG. 5A, schematically showing the display according to an embodiment of the disclosure.
FIG. 6C is a cross-sectional view, taken along the line 6c-6c in FIG. 5A, schematically showing the display according to an embodiment of the disclosure.

### [Mode for the Invention]

In the following description, various embodiments of the disclosure are described with reference to the accompanying drawings. The embodiments of the disclosure and the terms used therein are not intended to limit the technical features described in this document to specific embodiments, and various modifications, equivalents, or substitutes of such embodiments are possible.

In the drawings, similar reference numerals may be used for similar or related components. The singular form of a noun corresponding to an item may mean one or more of the items, unless the relevant context clearly indicates otherwise.

In this document, the phrases "A or B", "at least one of A and B", "at least one of A or B", "A, B, or C", "at least one of A, B, and C", and "at least one of A, B, or C" can each include any one of the items listed together in that phrase, or all possible combinations thereof. The term such as "first" or "second" can be used merely to distinguish the corresponding component from the others and does not limit the corresponding component in any other respect (e.g., importance or order). When a particular (e.g., a first) component is referred to as being "coupled" or "connected" to another (e.g., a second) component, with or without the term "functionally" or "communicatively," it means that the particular component can be connected to another component directly (e.g., wired), wirelessly, or through a third component.

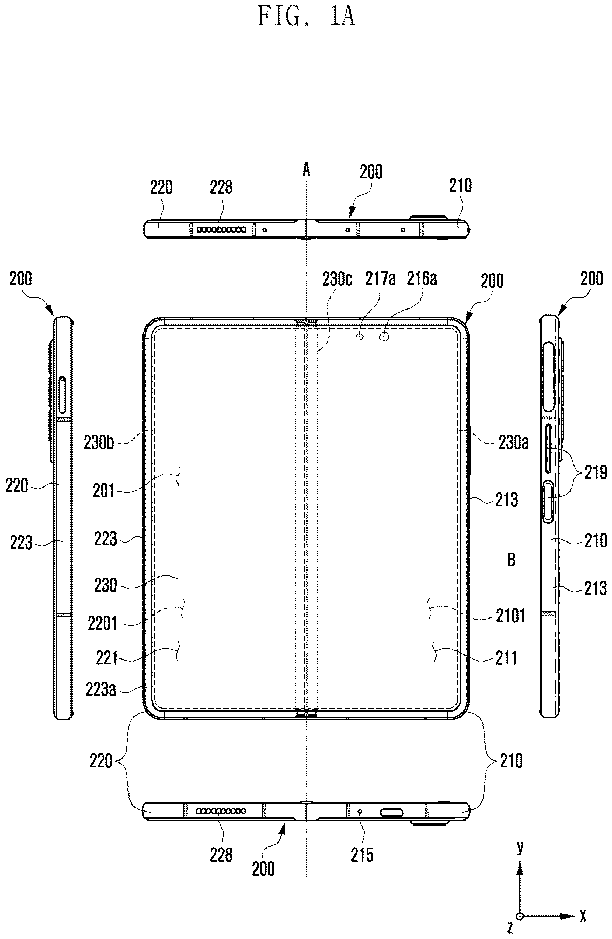

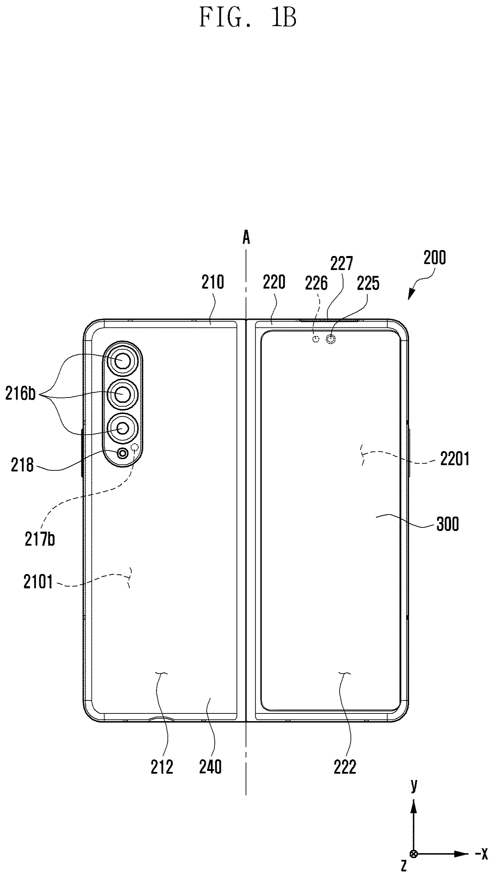

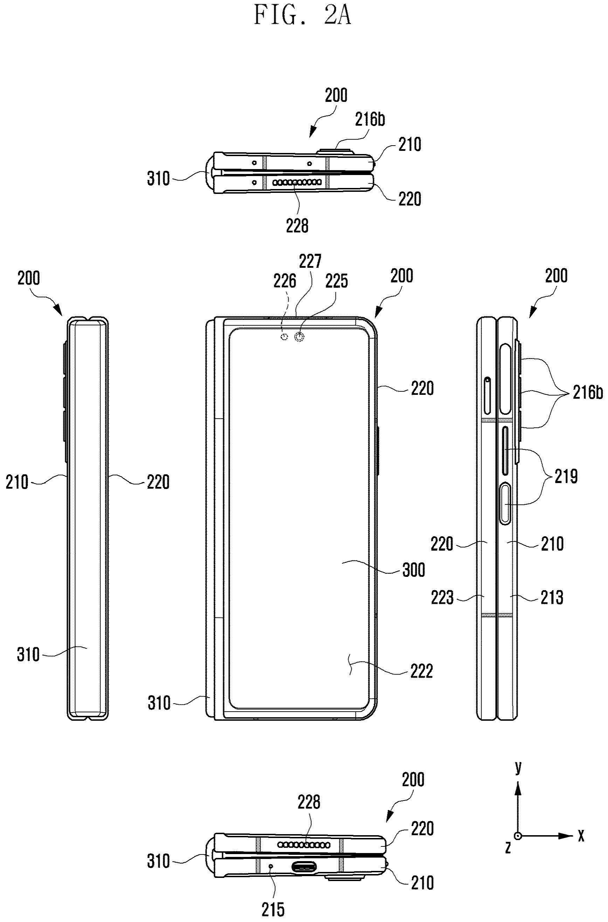

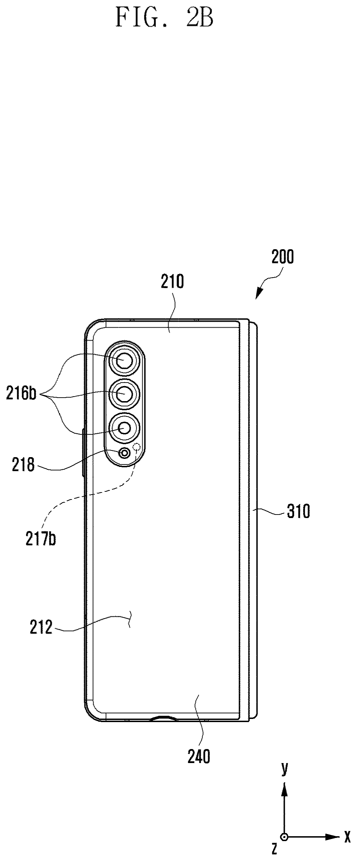

FIGS. 1A and 1B illustrate a front view and a rear view of an unfolded state of an electronic device according to an embodiment of the disclosure. FIGS. 2A and 2B illustrate a front view and a rear view of a folded state of an electronic device according to an embodiment of the disclosure.

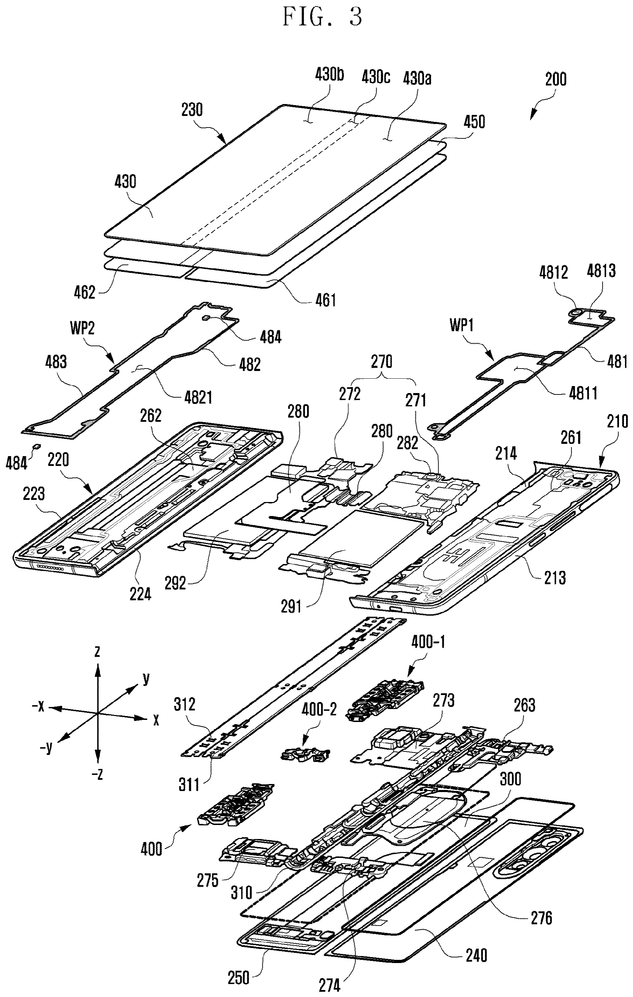

Referring to FIGS. 1A to 2B, an electronic device 200 may include a pair of housings 210 and 220 (e.g., a foldable housing structure) rotatably coupled to each other with reference to folding axis A through a hinge device (e.g., a hinge device 320 of FIG. 3) (e.g., a hinge module) so as to be folded with respect to each other, a first display 230 (e.g., a flexible display, a foldable display, or a main display) disposed through the pair of housings 210 and 220, and/or a second display 300 (e.g., a sub display) disposed through the second housing 220. According to an embodiment, at least a part of the hinge device (e.g., the hinge device 320 of FIG. 3) may be disposed so as not to be seen from the outside through the first housing 210 and the second housing 220, and may be disposed so as not to be seen from the outside through the hinge housing 310 covering a foldable portion. In the disclosure, a surface in which the first display 230 is disposed may be defined as a front surface of the electronic device 200, and a surface opposite to the front surface may be defined as a rear surface of the electronic device 200. In addition, a surface surrounding a space between the front surface and the rear surface may be defined as a side surface of the electronic device 200.

According to an embodiment, the pair of housings 210 and 220 may include a first housing 210 and a second housing 220 foldably arranged with respect to each other through the hinge device (e.g., the hinge device 320 of FIG. 3). According to an embodiment, the shape and the coupling of the pair of housings 210 and 220 are not limited to those illustrated in FIGS. 1A to 2B, and the pair of housings 210 and 220 may be implemented by a combination and/or coupling of other shapes or components. According to an embodiment, the first housing 210 and the second housing 220 may be arranged on opposite sides with reference to the folding axis A, and may have shapes that are entirely symmetric to each other with respect to the folding axis A. According to an embodiment, the first housing 210 and the second housing 220 may be asymmetrically folded with reference to the folding axis A. According to an embodiment, the angle or the distance between the first housing 210 and the second housing 220 may vary depending on whether the electronic device 200 is in an unfolded state, a folded state, or an intermediate state.

According to an embodiment, the first housing 210 may include, in the unfolded state of the electronic device 200, a first surface 211 connected to the hinge device (e.g., the hinge device 320 of FIG. 3) and disposed to be oriented to the front surface of the electronic device 200, a second surface 212 oriented in a direction opposite to the first surface 211, and/or a first side member 213 surrounding at least a part of a first space between the first surface 211 and the second surface 212. According to an embodiment, the second housing 220 may include, in the unfolded state of the electronic device 200, a third surface 221 connected to the hinge device (e.g., the hinge device 320 of FIG. 3) and disposed to be oriented to the front surface of the electronic device 200, a fourth surface 222 oriented in a direction opposite to the third surface 221, and/or a second side member 223 surrounding at least a part of a second space between the third surface 221 and the fourth surface 222. According to an embodiment, the first surface 211 and the third surface 221 may be oriented in substantially the same direction in the unfolded state, and the first surface 211 and the third surface 221 may at least partially face each other in the folded state. According to an embodiment, the electronic device 200 may include a recess 201 formed to receive the first display 230 through structural coupling of the first housing 210 and the second housing 220. According to an embodiment, the recess 201 may have substantially the same shape as the first display 230.

According to an embodiment, the hinge housing 310 (e.g., a hinge cover) may be disposed between the first housing 210 and the second housing 220, and may be disposed to cover a part (e.g., at least one hinge module) of the hinge device (e.g., the hinge device 320 of FIG. 3) disposed on the hinge housing 310. According to an embodiment, the hinge housing 310 may be hidden or exposed from or to the outside by a part of the first housing 210 and the second housing 220 according to the unfolded state, the folded state, or the intermediate state of the electronic device 200. For example, when the electronic device 200 is in the unfolded state, at least a part of the hinge housing 310 may be covered by the first housing 210 and the second housing 220 and not be substantially exposed. According to an embodiment, when the electronic device 200 is in the folded state, at least a part of the hinge housing 310 may be exposed to the outside between the first housing 210 and the second housing 220. According to an embodiment, in the intermediate state in which the first housing 210 and the second housing 220 are folded with each other by a predetermined angle (folded with a certain angle), the hinge housing 310 may be at least partially exposed to the outside of the electronic device 200 between the first housing 210 and the second housing 220. For example, an area in which the hinge housing 310 is exposed to the outside, may be smaller than that in a case in which the electronic device 200 is completely folded. According to an embodiment, the hinge housing 310 may include a curved surface.

According to an embodiment, when the electronic device 200 is in the unfolded state (e.g., the states shown in FIGS. 1A and 1B), the first housing 210 and the second housing 220 may meet at an about 180-degree angle, and a first area 230a, a second area 230b, and a folding area 230c of the first display 230 may form the same plane and arranged to be oriented in substantially the same direction (e.g., a z-axis direction). In another embodiment, when the electronic device 200 is in the unfolded state, the first housing 210 may rotate by an about 360-degree angle with respect to the second housing 220, and may be outwardly folded (an out-folding scheme) so that the second surface 212 and the fourth surface 222 face each other.

According to an embodiment, when the electronic device 200 is in the folded state (e.g., the states shown in FIGS. 2A and 2B), the first surface 211 of the first housing 210 and the third surface 221 of the second housing 220 may be arranged to face each other. In this case, the first area 230a and the second area 230b of the first display 230 may form a narrow angle (e.g., a range between 0 degree to about 10 degrees) through the folding area 230c, and may be arranged to face each other. According to an embodiment, at least a part of the folding area 230c may be deformed into a curved shape having a predetermined curvature. According to an embodiment, when the electronic device 200 is in the intermediate state, the first housing 210 and the second housing 220 may be arranged at a predetermined angle (a certain angle). In this case, the first area 230a and the second area 230b of the first display 230 may form an angle that is greater than that in the folded state and smaller than that in the unfolded state, and the curvature of the folding area 230c may be lower than that in the folded state, and may be higher than that in the unfolded state. In an embodiment, the first housing 210 and the second housing 220 may form an angle which allows stopping at a designated folding angle between the folded state and the unfolded state (a free stop function), through the hinge device (e.g., the hinge device 320 of FIG. 3). In an embodiment, the first housing 210 and the second housing 220 may continuously operate while being pressed in an unfolding direction or a folding direction with reference to a designated inflection angle, through the hinge device (e.g., the hinge device 320 of FIG. 3).

According to an embodiment, the electronic device 200 may include at least one of at least one display 230 and 300 disposed on the first housing 210 and/or the second housing 220, an input device 215, sound output devices 227 and 228, sensor modules 217a, 217b, and 226, camera modules 216a, 216b, and 225, a key input device 219, an indicator (not shown), or a connector port 229. In an embodiment, the electronic device 200 may omit at least one of the elements, or may additionally include at least one another element.

According to an embodiment, the at least one display 230 and 300 may include a first display 230 (e.g., a flexible display) disposed to be supported by the third surface 221 of the second housing 220 from the first surface 211 of the first housing 210 through the hinge device (e.g., the hinge device 320 of FIG. 3), and a second display 300 disposed to be at least partially seen from the outside through the fourth surface 222 in a space in the second housing 220. In an embodiment, the second display 300 may be disposed to be seen from the outside through the second surface 212 in a space in the first housing 210. According to an embodiment, the first display 230 may be mainly used in the unfolded state of the electronic device 200, and the second display 300 may be mainly used in the folded state of the electronic device 200. According to an embodiment, the electronic device 200 may control, in the intermediate state, the first display 230 and/or the second display 300 to be used, based on a folding angle between the first housing 210 and the second housing 220.

According to an embodiment, the first display 230 may be disposed in a receiving space formed by the pair of housings 210 and 220. For example, the first display 200 may be disposed in a recess 201 formed by the pair of housings 210 and 220, and may be disposed to occupy substantially the most of the front surface of the electronic device 200in the unfolded state. According to an embodiment, the first display 230 may include a display module (230) having at least one area which can be deformed into a plane or a curved surface. According to an embodiment, the first display 230 may include the first area 230a facing the first housing 210 and the second area 230b facing the second housing 220. According to an embodiment, the first display 230 may include the folding area 230c including a part of the first area 230a and a part of the second area 230b with respect to the folding axis A. According to an embodiment, at least a part of the folding area 230c may include an area corresponding to the hinge device (e.g., the hinge device 320 of FIG. 3). According to an embodiment, a division of an area of the first display 230 merely corresponds to exemplary physical division by the pair of housings 210 and 220 and the hinge device (e.g., the hinge device 320 of FIG. 3), and the first display 230 may be substantially displayed as one seamless full screen through the pair of the housings 210 and 220 and the hinge device (e.g., the hinge device 320 of FIG. 3). According to an embodiment, the first area 230a and the second area 230b may have shapes that are entirely symmetric or partially asymmetric to each other with respect to the folding area 230c.

According to an embodiment, the electronic device 200 may include a first rear cover 240 disposed on the second surface 212 of the first housing 210 and a second rear cover 250 disposed on the fourth surface 222 of the second housing 220. In an embodiment, at least a part of the first rear cover 240 may be integrally formed with the first side member 213. In an embodiment, at least a part of the second rear cover 250 may be integrally formed with the second side member 223. According to an embodiment, at least one of the first rear cover 240 and the second rear cover 250 may be substantially formed of a transparent plate (e.g., a polymer plate or glass plate including various coding layers) or an opaque plate. According to an embodiment, the first rear cover 240 may be formed of, for example, an opaque plate such as coded or colored glass, ceramic, polymer, metal (e.g., aluminum, stainless steel (STS), or magnesium), or a combination of at least two of the materials above. According to an embodiment, the second rear cover 250 may be substantially formed of, for example, a transparent plate such as glass or polymer. Accordingly, the second display 300 may be disposed to be seen from the outside through the second rear cover 250 in a space in the second housing 220.

According to an embodiment, the input device 215 may include a microphone. In an embodiment, the input device 215 may include multiple microphones arranged to detect the direction of sound. According to an embodiment, the sound output devices 227 and 228 may include speakers. According to an embodiment, the sound output devices 227 and 228 may include a call receiver 227 disposed through the fourth surface 222 of the second housing 220 and an external speaker 228 disposed through at least a part of the second side member 223 of the second housing 220. In an embodiment, the input device 215, the sound output devices 227 and 228, and the connector 229 may be disposed in spaces of the first housing 210 and/or the second housing 220, and may be exposed to an external environment through at least one hole formed through the first housing 210 and/or the second housing 220. In an embodiment, holes formed through the first housing 210 and/or the second housing 220 may be commonly used for the input device 215 and the sound output devices 227 and 228. In an embodiment, the sound output devices 227 and 228 may include a speaker (e.g., a piezo speaker) operating without including a hole formed through the first housing 210 and/or the second housing 220.

According to an embodiment, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220. According to an embodiment, the electronic device 200 may include a flash 218 disposed around the second camera module 216b. According to an embodiment, the flash 218 may include, for example, a light-emitting diode or a xenon lamp. According to an embodiment, the camera modules 216a, 216b, and 225 may include one or multiple lenses, an image sensor, and/or an image signal processor. In an embodiment, at least one of the camera modules 216a, 216b, and 225 may include two or more lenses (e.g., wide-angle and telephoto lenses) and image sensors, and may be arranged together on one surface of the first housing 210 and/or the second housing 220.

According to an embodiment, the sensor modules 217a, 217b, and 226 may generate a data value or an electrical signal corresponding to an internal operational state or an external environmental state of the electronic device 200.According to an embodiment, the sensor modules 217a, 217b, and 226 may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220. In an embodiment, the sensor modules 217a, 217b, and 226 may include at least one of a gesture sensor, a grip sensor, a color sensor, an infrared (IR) sensor, an illuminance sensor, an ultrasonic sensor, an iris recognition sensor, or a distance detection sensor (e.g., a time of flight (TOF) sensor or a light detection and ranging (LiDAR)).

According to an embodiment, the electronic device 200 may further include an unillustrated sensor module, for example, at least one of an atmospheric sensor, a magnetic sensor, a biometric sensor, a temperature sensor, a humidity sensor, or a fingerprint recognition sensor. In an embodiment, the fingerprint recognition sensor may be disposed through at least one of the first side member 213 of the first housing 210 and/or the second side member 223 of the second housing 220.

According to an embodiment, the key input device 219 may be disposed to be exposed to the outside through the first side member 213 of the first housing 210. In an embodiment, the key input device 219 may be disposed to be exposed to the outside through the second side member 223 of the second housing 220. In an embodiment, the electronic device 200 may not include some or all of the key input device 219, and the unincluded key input device 219 may be implemented in another shape such as a soft key on the least one display 230 and 300. In another embodiment, the key input device 219 may be implemented by using a pressure sensor included in the at least one display 230 and 300.

According to an embodiment, the connector port 229 may include a connector (e.g., a USB connector or an IF module (an interface connector port module)) for transmitting or receiving data and/or power to and/or from an external electronic device. In an embodiment, the connector port 229 may perform a function of transmitting or receiving an audio signal to or from the external electronic device together, or may further include a separate connector port (e.g., an ear jack hole) for performing a function of transmitting or receiving an audio signal to or from the external electronic device.

According to an embodiment, at least one camera modules 216a and 225 of the camera modules 216a, 216b, and 225, at least one sensor module 217a and 226 of the sensor modules 217a, 217b, and 226, and/or an indicator may be arranged to be exposed through the at least one display 230 and 300. For example, the at least one camera modules 216a and 225, the at least one sensor module 217a and 226, and/or the indicator may be arranged under an activated area (a display area) of the at least one display 230 and 300 in a space in the at least one housing 210 and 220, and may be arranged to come into contact with an external environment through a transparent area or an opening that is perforated to a cover member (e.g., a window layer (not shown) of the first display 230 and/or the second rear cover 250). According to an embodiment, an area in which the at least one display 230 and 300 and the at least one camera module 216a and 225 face each other may be formed as a transmission area having a predetermined transmission ratio, as a part of an area in which a content is displayed. According to an embodiment, the transmission area may be formed to have a transmission ratio in the range of about 5% to about 20%. The transmission area may include an area overlapping with an effective area (e.g., an angle of view area) of the at least one camera module 216a and 225, wherein an image is formed on the image sensor in the effective area, and light for generating an image passes through the effective area. For example, the transmission area of the display 230 and 300 may include an area in which the density of a pixel is lower than that in a surrounding area. For example, the transmission area may be replaced with an opening. For example, the at least one camera module 216a and 225 may include an under-display camera (UDC) or an under-panel camera (UPC). In another embodiment, some camera modules or sensor modules 271a and 226 may be arranged to perform functions thereof without being visually exposed through the display. For example, an area facing the sensor module 217a and 226 and/or the camera module 216a and 225 arranged under the display 230 and 300 (e.g., a display panel) corresponds to an under-display camera (UDC) structure, and a perforated opening is not necessarily required.

FIG. 3 is an exploded perspective view illustrating an electronic device 200 according to an embodiment of the disclosure.

Referring to FIG. 3, the electronic device 200 may include a first display 230 (e.g., a display module(230)), a second display 300, a hinge device 320, a pair of support members 261 and 262, at least one substrate 270 (e.g., a printed circuit board (PCB)), a first housing 210, a second housing 220, a first rear cover 240, and/or a second rear cover 250.

According to an embodiment, the first display 230 may include a display panel 430 (e.g., a flexible display panel), a support plate 450 disposed under the display panel 430, and a pair of reinforced plates 461 and 462 arranged under the support plate 450. According to an embodiment, the display panel 430 may include a first panel area 430a corresponding to a first area (e.g., the first area 230a of FIG. 1A) of the first display 230, a second panel area 430b extending from the first panel area 430a and corresponding to a second area (e.g., the second area 230b of FIG. 1A) of the first display 230, and a third panel area 430c for connecting the first panel area 430a and the second panel area 430b and corresponding to a folding area (e.g., the folding area 230c of FIG. 1A) of the first display 230. According to an embodiment, the support plate 450 may be disposed between the display panel 430 and the pair of support members 261 and 262 and may be formed to have a material and a shape for providing a planar support structure for the first panel area 430a and the second panel area 430b and a bendable structure for assisting in the flexibility of the third panel area 430c. According to an embodiment, the support plate 450 may be formed of a conductive material (e.g., metal) or a non-conductive material (e.g., polymer or fiber reinforced plastic (FRP)). According to an embodiment, the pair of reinforced plates 461 and 462 may include, between the support plate 450 and the pair of support members 261 and 262, a first reinforced plate 461 disposed to correspond to at least a part of the first panel 430a and the third panel area 430c, and a second reinforced plate 462 disposed to correspond to at least a part of the second panel area 460b and the third panel area 430c. According to an embodiment, the pair of reinforced plates 461 and 462 may be formed of metal materials (e.g., SUS), and may thus assist in reinforcing of the rigidity and a ground connection structure for the first display 230.

According to an embodiment, the second display 300 may be disposed in a space between the second housing 220 and the second rear cover 250. According to an embodiment, the second display 300 may be disposed in a space between the second housing 220 and the second rear cover 250 so as to allow the second display 300 to be seen from the outside through substantially the entire area of the second rear cover 250.

According to an embodiment, at least a part of the first support member 261 may be bendably coupled to the second support member 262 through the hinge device 320. According to an embodiment, the electronic device 200 may include at least one wire member 280 (e.g., a flexible printed circuit board (FPCB)) disposed from at least a part of the first support member 261 to a part of the second support member 262 by crossing the hinge device 320. According to an embodiment, the first support member 261 may be disposed by extending from the first side member 213 or structurally coupled to the first side member 213. According to an embodiment, the electronic device 200 may include a first space (e.g., a first space 2101 of FIG. 1A) provided through the first support member 261 and the first rear cover 240. According to an embodiment, the first housing 210 (e.g., a first housing structure) may be configured by coupling of the first side member 213, the first support member 261, and the first rear cover 240. According to an embodiment, the second support member 262 may be disposed by extending from the second side member 223 or structurally coupled to the second side member 223. According to an embodiment, the electronic device 200 may include a second space (e.g., a second space 2201 of FIG. 1A) provided through the second support member 262 and the second rear cover 250. According to an embodiment, the second housing 220 (e.g., a second housing structure) may be configured through coupling of the second side member 223, the second support member 262, and the second rear cover 250. According to an embodiment, at least a part of the hinge device 320 and/or the at least one wire member 280 may be disposed to be supported through at least a part of the pair of support members 261 and 262. According to an embodiment, the at least one wire member 280 may be disposed in a direction (e.g., an x-axis direction) crossing the first support member 261 and the second support member 262. According to an embodiment, the at least one wire member 280 may be disposed in a direction (e.g., an x-axis direction) substantially perpendicular to a folding axis (e.g., a y-axis or the folding axis A of FIG. 1A).

According to an embodiment, the at least one substrate 270 may include a first substrate 271 disposed in the first space 2101 and a second substrate 272 disposed in the second space 2201. According to an embodiment, the first substrate 271 and the second substrate 272 may include multiple electronic components arranged to implement various functions of the electronic device 200. According to an embodiment, the first substrate 271 and the second substrate 272 may be electrically connected to each other through the at least one wire member 280. In one embodiment, the camera module 282 may be disposed on the first substrate 271.

According to an embodiment, the electronic device 200 may include at least one battery 291 and 292. According to an embodiment, the at least one battery 291 and 292 may include a first battery 291 disposed in the first space 2101 of the first housing 210 and electrically connected to the first substrate 271, and a second battery disposed in the second space 2201 of the second housing 220 and electrically connected to the second substrate 272. According to an embodiment, the first support member 261 and the second support member 262 may further include at least one swelling hole for the first battery 291 and the second battery 292.

According to an embodiment, the first housing 210 may include a first rotation support surface 214, and the second housing 220 may include a second rotation support surface 224 corresponding to the first rotation support surface 214. According to an embodiment, the first rotation support surface 214 and the second rotation support surface 224 may include a curved surface (seamlessly connected) corresponding to an external surface of a curved shape of the hinge housing 310. According to an embodiment, when the electronic device 200 is in the unfolded state, the first rotation support surface 214 and the second rotation support surface 224 may hide the hinge housing 310 not to expose the hinge housing 310 through the rear surface of the electronic device 200 or to expose only a part thereof. According to an embodiment, when the electronic device 200 in the folded state, the first rotation support surface 214 and the second rotation support surface 224 may be at least partially expose the hinge housing 310 through the rear surface of the electronic device 200 as the curved shape of the hinge housing 310 rotates along an external surface.

According to an embodiment, the electronic device 200 may include at least one antenna 276 disposed in the first space 2201. According to an embodiment, the at least one antenna 276 may be disposed on the first battery 291 and the first rear cover 240 in the first space 2201. According to an embodiment, the at least one antenna 276 may include, for example, a near-field communication (NFC) antenna, a wireless charging antenna, and/or a magnetic secure transmission (MST) antenna. According to an embodiment, the at least one antenna 276 may perform, for example, short-distance communication with an external device, or wirelessly transmit or receive power required for charging. In an embodiment, an antenna structure may be formed by at least a part of the first side member 213 or the second side member 223 and/or a part or a combination of the first support member 261 and the second support member 262.

According to an embodiment, the electronic device 200 may further include at least one electronic component assembly 274 and 275 and/or additional support members 263 and 273 disposed in the first space 2101 and/or the second space 2201. For example, the at least one electronic component assembly may include an interface connector port assembly 274 or the speaker assembly 275.

According to an embodiment, the electronic device 100 may include a first waterproof structure WP1 disposed between the first reinforced plate 461 and the first support member 261 and a second waterproof structure WP2 disposed between the second reinforced plate 462 and the second support member 262. According to an embodiment, the first waterproof structure WP1 may include a first waterproof member 481 disposed to have at least one first waterproof space 4811, 4812, and 4813 formed between the first reinforced plate 461 and the first support member 261. According to an embodiment, the second waterproof structure WP2 may include a second waterproof member 482(e.g., 2-1 waterproof member 482), a third waterproof member 483(e.g., 2-2 waterproof member 483), and a fourth waterproof member 484(e.g., 2-3 waterproof member 484) disposed to have at least one second waterproof space 4821 formed between the second reinforced plate 462 and the second support member 262. According to an embodiment, the fourth waterproof member 484 may be disposed in a space between the second waterproof member 482 and the third waterproof member 483 spaced apart from each other, to connect the second waterproof member and the third waterproof member to each other.

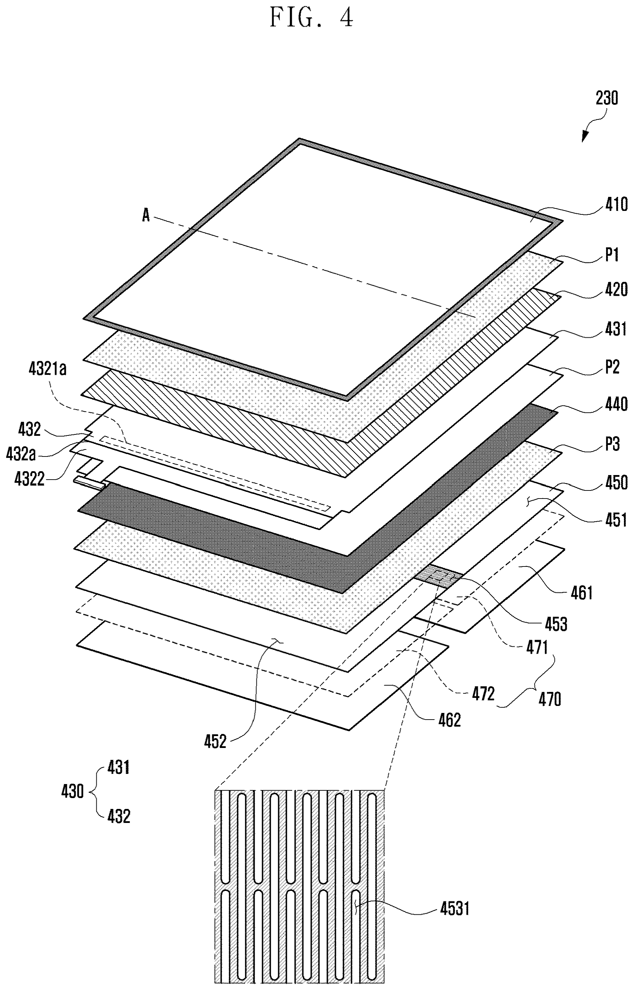

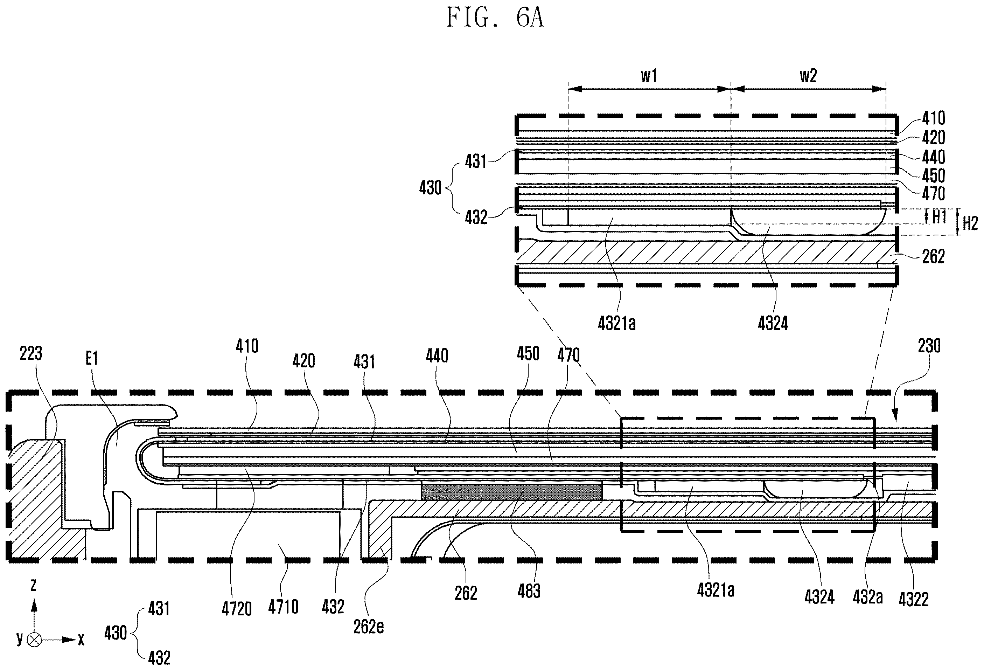

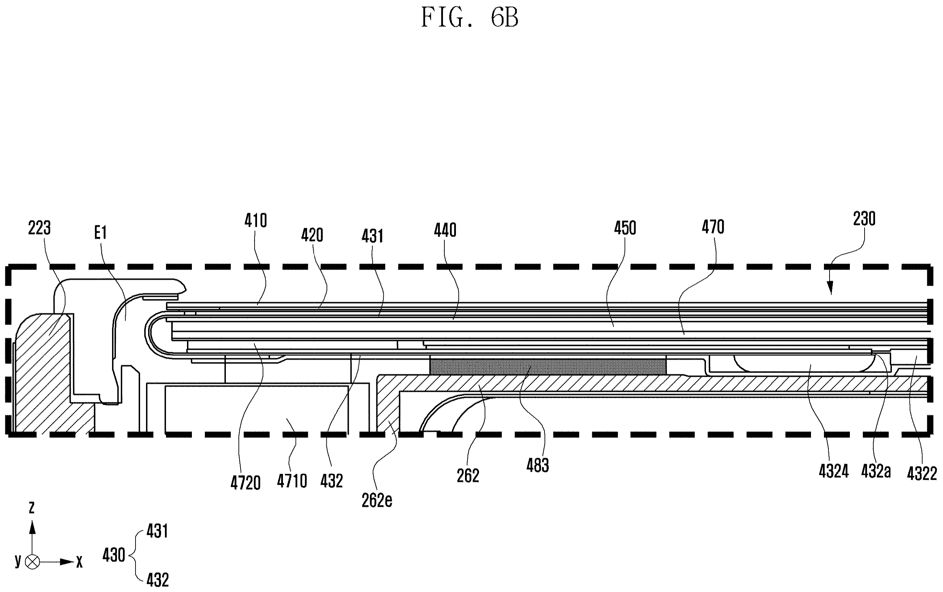

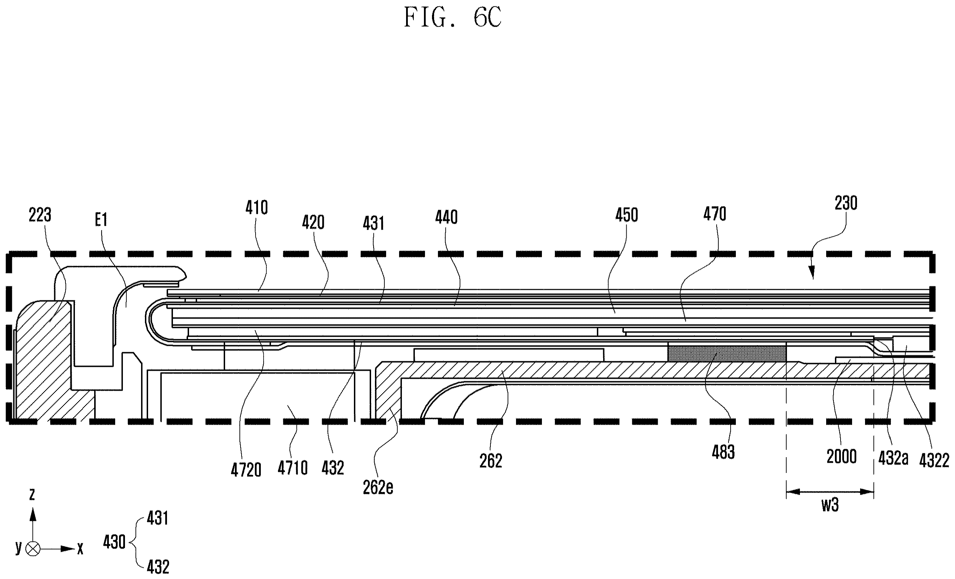

According to an embodiment, the at least one first waterproof space 4811 corresponds to a wire structure for connecting an electronic component (e.g., a first digitizer panel 471 of FIG. 4) disposed between the first reinforced plate 461 and the first support member 262 to the first space 2101 through the first waterproof member 481, and may be disposed to receive a through-path of an connection portion (e.g., a first connection portion 4711 of FIG. 6). According to an embodiment, the at least one second waterproof space 4821 corresponds to a wire structure for connecting an electronic component (e.g., a second digitizer panel 472 of FIG. 4) disposed between the second reinforced plate 462 and the second support member 262 to the second space 2201 through the second waterproof member 482, the third waterproof member 483, and the fourth waterproof member 484, and may be disposed to receive a through-path of an connection (e.g., a second connection 4721 of FIG. 6). According to an embodiment, the at least one first waterproof space 4812 and 4813 may receive an area corresponding to at least one electronic component (e.g., a camera module or a sensor module) disposed to be supported by the first support member 261. According to an embodiment, the at least one second waterproof space 4821 may receive at least a part of a bending portion (e.g., a bending portion 432 of FIG. 4) bent over a rear surface of the first display 230. For example, the at least one second waterproof space 4821 may be disposed to extend from a display panel (e.g., a display panel 430 of FIG. 4) of the first display 230 and surround at least a part of the bending portion 432 bent over the rear surface. Accordingly, multiple electrical elements (not shown) and a control circuit (e.g., a control circuit 4321a of FIG. 4) disposed on the bending portion 432 may be disposed in the at least one second waterproof space 4821, so as to be protected from water and/or a foreign material from the outside.

In the electronic device 200 according to an exemplary embodiment of the disclosure, the at least one waterproof member 481, 482, 483, and 484 may include at least one waterproof structure WP1 and WP2 disposed between the first support member 261 of the first housing 210 and the first reinforced plate 461 and/or between the second support member 262 of the second housing 220 and the second reinforced plate 462, so that a phenomenon in which the first display is damaged when the first display 230 is separated from the housings 210 and 220 for maintenance of the electronic device 200 can be reduced through a waterproof member, and the at least one waterproof member 481, 482, 483, and 484 is disposed to avoid the rear surface of the first display 230, and thus, external visibility can be enhanced and a surface quality can be secured.

FIG. 4 is an exploded perspective view showing a display module according to an embodiment of the disclosure. The display module in FIG. 4 may be an example of the first display previously described in FIGS. 1A and 3 (e.g., the first display 230 in FIGS. 1A and 3).

The display module 230 according to exemplary embodiments of the disclosure may include an unbreakable (UB) type OLED display (e.g., a curved display). However, it is not limited to this, and the display module 230 may also include a flat type display of an OCTA (on-cell touch AMOLED (active matrix organic light-emitting diode)).

With reference to FIG. 4, the display module 230 includes a window layer 410 and also includes a polarizing layer or polarizer 420 (e.g., a polarizing film), a display panel 430, a polymer layer 440, a support plate 450, and reinforcing plates 461 and 462, which are sequentially arranged on the rear surface (e.g., in the negative z-axis direction) of the window layer 410. In some embodiments, the display module 230 has a damping layer 420, instead of the polarizing layer 420, arranged between the window layer 410 and the display panel 430. Alternatively, in some embodiments, the damping layer 420 may be arranged on or under the polarizing layer 420.

In some embodiments, the display module 230 includes a digitizer panel 470 disposed between the support plate 450 and the reinforcing plates 461 and 462. In some embodiments, the digitizer panel 470 is disposed between the polymer layer 440 and the support plate 450. Although not shown in the drawing, in one embodiment, a buffer member (not shown) may be disposed between the window layer 410 and the support plate 450. The buffer member may cushion an impact transmitted from the window layer 410 to the support plate 450.

According to one embodiment, the window layer 410 includes a glass layer. In some embodiments, the window layer 410 has a protective film disposed thereon. For example, the window layer 410 on which the protective film is disposed may be protected against external impact. According to one embodiment, the window layer 410 includes ultra-thin glass (UTG). In some embodiments, the window layer 410 includes a polymer. In this case, the window layer 410 may include polyethylene terephthalate (PET) or polyimide (PI). In some embodiments, the window layer 410 is disposed in multiple layers to include a glass layer and a polymer.

According to one embodiment, the window layer 410, the polarizing layer 420, the display panel 430, the polymer layer 440, and the support plate 450 are arranged to span at least a portion of a first surface (e.g., the first surface 211 in FIG. 1A) of a first housing (e.g., the first housing 210 in FIG. 1A) and a third surface (e.g., the third surface 221 in FIG. 1A) of a second housing (e.g., the second housing 220 in FIG. 1A). According to one embodiment, the reinforcing plates 461 and 462 include a first reinforcing plate 461 corresponding to the first housing (e.g., the first housing 210 in FIG. 1A) and a second reinforcing plate 462 corresponding to the second housing (e.g., the second housing 220 in FIG. 1A). According to one embodiment, the reinforcing plates 461 and 462 provide rigidity for the display module 230 and may be used as a ground to prevent malfunction of the display module 230. According to one embodiment, the reinforcing plates 461 and 462 are formed of a metallic material. According to one embodiment, the reinforcing plates 461 and 462 are formed of steel use stainless (SUS), copper (Cu) or aluminum (Al). According to one embodiment, the window layer 410, the polarizing layer 420, the display panel 430, the polymer layer 440, the support plate 450, and the reinforcing plates 461 and 462 are attached to each other via an adhesive P1, P2, or P3. For example, the adhesive P1, P2, or P3 may include at least one of an optical clear adhesive (OCA), a pressure sensitive adhesive (PSA), a heat-reactive adhesive, a general adhesive, or a double-sided tape.

According to one embodiment, the display panel 430 includes a plurality of pixels and a wiring structure (e.g., an electrode pattern). According to one embodiment, the polarizing layer 420 selectively transmits light generated from a light source of the display panel 430 and vibrating in a certain direction. According to one embodiment, the display panel 430 and the polarizing layer 420 are formed integrally. According to one embodiment, the display module 230 may include a touch panel (not shown).

According to one embodiment, the polymer layer 440 is disposed under the display panel 430 to provide a dark background for securing the visibility of the display panel 430 and is formed of a buffering material for a buffering action. In some embodiments, to waterproof the display module 230, the polymer layer 440 may be removed or disposed under the support plate 450.

According to one embodiment, the support plate 450 can provide a bending characteristic to the display module 230. For example, the support plate 450 may be formed of a non-metallic thin-plate material, such as fiber reinforced plastics (FRP) (e.g., carbon fiber reinforced plastics (CFRP) or glass fiber reinforced plastics (GFRP)) having a rigid characteristic for supporting the display panel 430. According to one embodiment, the support plate 450 includes a first flat portion 451 corresponding to the first housing (e.g., the first housing 210 in FIG. 1A), a second flat portion 452 corresponding to the second housing (e.g., the second housing 220 in FIG. 1A), and a second region 453 (also referred to as a flexible portion or a bending portion) connecting the first flat portion 451 and the second flat portion 452. According to one embodiment, the second region 453 has a plurality of openings 4531 arranged at a specified interval. According to one embodiment, the second region 453 may have a bending characteristic determined through at least one of a size, a shape, or an arrangement density of at least some openings among the plurality of openings 4531. In some embodiments, the support plate 450 is formed of a metallic material such as SUS (e.g., stainless steel (STS)), Cu, Al, or a metal clad (e.g., a laminated member in which SUS and Al are alternately arranged). In this case, the support plate 450 has a plurality of openings formed throughout the entire area so that a detection operation of the digitizer panel 470 arranged thereunder is induced. In one embodiment, the support plate 450 is used to reinforce the rigidity of the electronic device (e.g., the electronic device 200 in FIG. 1A), shield ambient noise, and dissipate heat emitted from surrounding heat-emitting components.

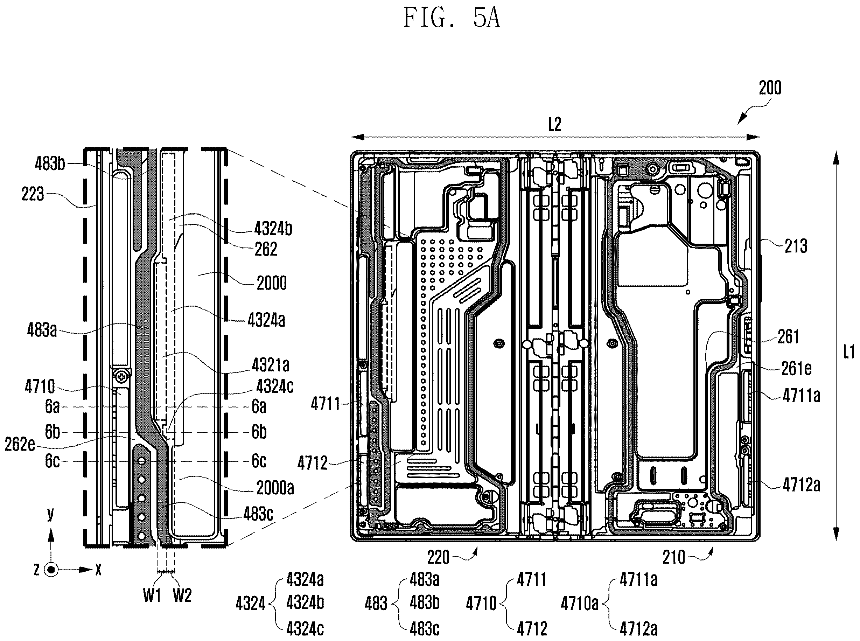

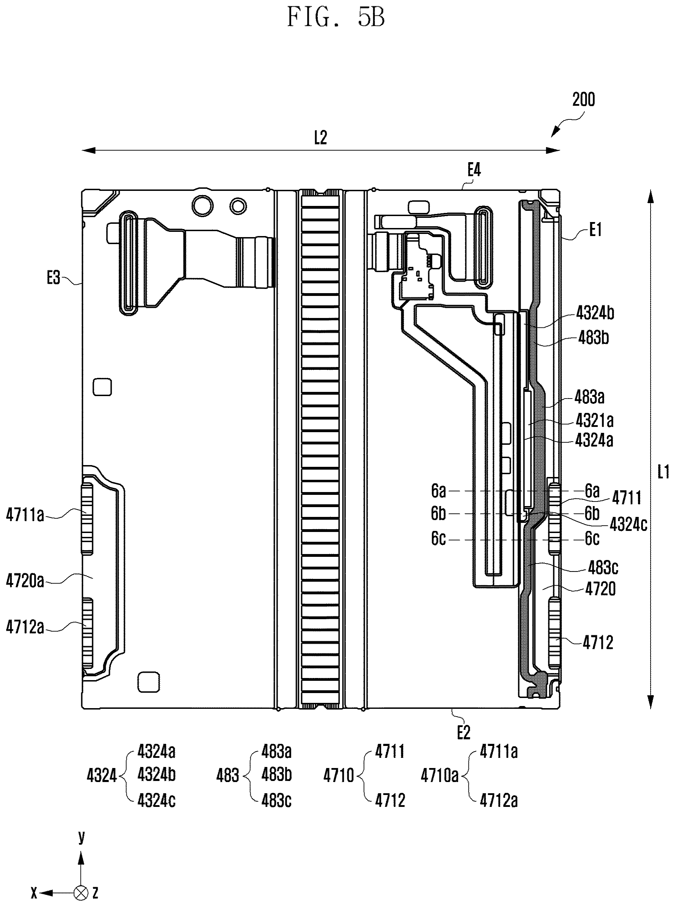

According to one embodiment, the display 230 includes the digitizer panel 470 as a detection member that is disposed under the support plate 450 and receives an input from an electronic pen (e.g., a stylus). According to one embodiment, the digitizer panel 470 includes coil members disposed on a dielectric substrate (e.g., a dielectric film or a dielectric sheet) so as to detect a resonant frequency of an electromagnetic induction type applied from the electronic pen. According to one embodiment, the digitizer panel 470 includes a first digitizer panel 471 corresponding to the first housing (e.g., the first housing 210 in FIG. 1A) and a second digitizer panel 472 corresponding to the second housing (e.g., the second housing 220 in FIG. 1A). According to one embodiment, the first digitizer panel 471 and the second digitizer panel 472 are electrically connected to substrates (e.g., the substrates 271 and 272 in FIG. 3) of the electronic device (e.g., the electronic device 200 in FIG. 3) through connection members (e.g., the connection member 4711 and the second connection member 4721 in FIG. 5A or 5B), respectively, thereby operating as a single digitizer panel. In some embodiments, the first digitizer panel 471 and the second digitizer panel 472 are operated separately. In some embodiments, the first digitizer panel 471 and the second digitizer panel 472 are formed integrally and operate separately.

According to one embodiment, the display module 230 includes at least one functional member (not shown) disposed between the polymer layer 440 and the support plate 450 or under the support plate 450. According to one embodiment, the functional member includes a graphite sheet for heat dissipation, an added display, a force touch FPCB, a fingerprint sensor FPCB, an antenna radiator for communication, or a conductive/non-conductive tape. According to one embodiment, if not bendable, the functional member may be individually disposed in the first housing (e.g., the first housing 210 in FIG. 1A) and the second housing (e.g., the second housing 220 in FIG. 1A). According to one embodiment, if bendable, the functional member may be disposed from the first housing (e.g., the first housing 210 in FIG. 1A) to at least a portion of the second housing (e.g., the second housing 220 in FIG. 1A) via a hinge device (e.g., the hinge device 320 in FIG. 3).

According to one embodiment, the display module 230 includes a second area 432 arranged to be folded from the display panel 430 to at least a portion of the rear surface (e.g., in the negative z-axis direction) of the display module 230. According to one embodiment, a control circuit 4321a is disposed in the second area 432 and may be electrically connected to a flexible printed circuit board (FPCB) 4322 including a plurality of electronic elements. According to one embodiment, the control circuit 4321a is arranged adjacent to a display driver IC (DDI) or a touch display driver IC (TDDI) mounted in the second area 432 having an electrical wiring structure. According to one embodiment, the control circuit 4321a has a chip-on-panel or chip-on-plastic (COP) structure that is directly disposed in the second area 432. In some embodiments, the control circuit 4321a has a chip-on-film (COF) structure mounted on a separate connection film (not shown) that connects the second area 432 and the FPCB 4322. According to one embodiment, the display module 230 includes a plurality of electronic elements (not shown) arranged on the FPCB 4322. According to one embodiment, the display module 230 includes a connection member (not shown) extending from the FPCB 4322 and electrically connected to one substrate (e.g., the second substrate 272 in FIG. 3) of the electronic device (e.g., the electronic device 200 in FIG. 3). According to one embodiment, the plurality of electronic elements includes a touch IC, a flash memory for a display, an electrostatic discharge (ESD) prevention diode, a pressure sensor, a fingerprint sensor, or a passive element such as a decoupling capacitor (decap). In another embodiment, when the second area 432 is positioned in an area of the display module 230 facing the first housing (e.g., the first housing 210 in FIG. 1A), the connection member (not shown) is electrically connected to another substrate (e.g., the first substrate 271 in FIG. 3) of the electronic device (e.g., the electronic device 200 in FIG. 3).

According to one embodiment, at least one hinge device 400 and/or 400-1 includes a first hinge device 400 disposed at one end in a direction parallel to the folding axis (F) and a second hinge device 400-1 disposed at the other end. According to one embodiment, the first hinge device 400 and the second hinge device 400-1 have substantially the same configuration. According to one embodiment, the electronic device 200 includes a connection module 400-2 disposed between the first hinge device 400 and the second hinge device 400-1. According to one embodiment, the connection module 400-2 is disposed through a combination of at least one gear and/or a combination of at least one link. In one embodiment, the connection module 400-2 is replaced with the first hinge device 400. In one embodiment, the at least one hinge device 400 and/or 400-1 may be arranged at one location or at three or more locations spaced apart by a certain interval in a direction parallel to the folding axis (F). According to one embodiment, the electronic device 200 includes a first hinge plate 311 and a second hinge plate 312 connected through the at least one hinge device 400 and/or 400-1. According to one embodiment, the first hinge plate 311 forms the same plane as the first housing 210 in the unfolded state of the electronic device 200, and the second hinge plate 312 forms the same plane as the second housing 220 in the unfolded state of the electronic device 200. According to one embodiment, in the folded state of the electronic device 200, the first display 230 is deformed into a shape having a designated curve (e.g., a 'U' shape or a water drop shape) through the at least one hinge device 400 and/or 400-1 and accommodated in an internal space of the electronic device 200. According to one embodiment, in the folded state of the electronic device 200, the first hinge plate 311 and the second hinge plate 312 are moved to support at least a part of a folding area (e.g., the folding area 230c in FIG. 2A) deformed into a shape having a curved surface of the first display 230. According to one embodiment, in the folded state of the electronic device 200, the first housing 210 and the second housing 220 are moved to support substantially un-deformed flat portions (e.g., the first area 230a and the second area 230b in FIG. 2A) of the first display 230. According to one embodiment, in the folded state of the electronic device 200, the first hinge plate 311 may not form the same plane as the first housing 210, and the second hinge plate 312 may also not form the same plane as the second housing 220.

According to exemplary embodiments of the disclosure, the electronic device (e.g., the electronic device 200 in FIG. 3) may include a waterproof structure provided to protect, from external moisture and/or foreign matters, a wiring structure of the connection member (e.g., the connection members 4711 and 4721 in FIG. 5A/5B) drawn out from the digitizer panel 470 disposed on the rear surface of the display module 230, at least a part of the second area 432 that is bent to the rear surface of the display module 230 and includes the control circuit 4321a and a plurality of electronic elements, and regions corresponding to at least one electronic component (e.g., a camera module or a sensor module) disposed through the support members 261 and 262.

The display module 230 described above is only one example for explaining the disclosure, and the display module 230 does not necessarily have to include all the components described above. Accordingly, it may be possible to configure the display module 230 by omitting some of the above-described components or adding some components.

FIG. 5A is an enlarged view showing a rear structure of a display 230, a control circuit 4321a and its peripheral components according to an embodiment of the disclosure. FIG. 5B is a view showing a front structure of a display 230 according to an embodiment of the disclosure. FIG. 6A is a cross-sectional view, taken along the line 6a-6a in FIG. 5A, schematically showing the display 230, the control circuit and its peripheral components according to an embodiment of the disclosure. FIG. 6B is a cross-sectional view, taken along the line 6b-6b in FIG. 5A, schematically showing the display 230 according to an embodiment of the disclosure. FIG. 6C is a cross-sectional view, taken along the line 6c-6c in FIG. 5A, schematically showing the display 230 according to an embodiment of the disclosure.

In one embodiment, the first direction indicates the positive y-axis direction in FIGS. 5A, 5B, 6A, 6B, and 6C. The second direction indicates the negative y-axis direction in FIGS. 5A, 5B, 6A, 6B, and 6C. The third direction indicates the negative x-axis direction in FIGS. 5A, 5B, 6A, 6B, and 6C.

In one embodiment, with reference to FIGS. 3, 4, 5A, 5B, 6A, 6B, and 6C, the electronic device 200 includes housings 210 and 220, hinge devices 400 and 400-1, magnetic members 4710a and 4710, a display 230, and/or a buffer member 2000. In one embodiment, with reference to FIGS. 3, 4, 5A, 5B, 6A, 6B, and 6C, the housings 210 and 220 are rotatably connected about the folding axis (A) via the hinge devices 400 and 400-1. The first housing 210 and the second housing 220 are rotatably connected about the folding axis (A) via the hinge devices 400 and 400-1.

In one embodiment, with reference to FIG. 5A, the first housing 210 includes a first lateral member 213 and a first support member 261 extended from the first lateral member 213. The second housing 220 (e.g., the housing) includes a second lateral member 223 (e.g., the lateral member) and a second support member 262 (e.g., the support member) extended from the second lateral member 223.

In one embodiment, with reference to FIG. 5A, the magnetic members 4710 and 4710a are disposed on the support members 261 and 252 of the housings 210 and 220.

In one embodiment, with reference to FIG. 5A, the magnetic members 4710 and 4710a include a first magnetic member 4710a and a second magnetic member 4710 (e.g., the magnetic member 4710).

In one embodiment, with reference to FIG. 5A, the first magnetic member 4710a includes a plurality of magnetic members 4711a and 4712a. The second magnetic member 4710 (e.g., the magnetic member) may include a plurality of magnetic members 4711 and 4712.

In one embodiment, with reference to FIG. 5A, the first magnetic member 4710a is disposed on the first support member 261 of the first housing 210. The second magnetic member 4710 (e.g., the magnetic member) is disposed on the second support member 262 (e.g., the support member) of the second housing 220 (e.g., the housing).

In one embodiment, the first magnetic member 4710a and the second magnetic member 4710 face each other when the electronic device 200 is folded relative to the folding axis.

In one embodiment, with reference to FIG. 5A, the magnetic members 4710 and 4710a are disposed adjacent to a lateral portion of the electronic device 200 to fix the folded state of the electronic device 200 through magnetic force. For example, the first magnetic member 4710a is positioned between the first lateral member 213 of the first housing 210 and an edge 261e of the first support member 261 so as to be adjacent to the first lateral member 213.

In one embodiment, with reference to FIG. 5A, the second magnetic member 4710 is positioned between the second lateral member 223 (e.g., the lateral member 223) of the second housing 220 and an edge 262e of the second support member 262 so as to be adjacent to the second lateral member 223.

In one embodiment, the magnetic members 4710a and 4710 are positioned between the first lateral member 213 of the electronic device 200 and the edge 261e of the first support member 261 and between the second lateral member 223 and the edge 262e of the second support member 262, respectively, so as to secure the folded state of the electronic device 200 through magnetic force.

In one embodiment, when the electronic device 200 is in the folded state and thereby the first and second housings 210 and 220 are facing each other, the folded state of the electronic device 200 can be fixed by the attractive force of the first magnetic member 4710a and the second magnetic member 4710.

In one embodiment, with reference to FIGS. 5A, 5B, 6A, 6B, and 6C, the display 230 is disposed in the housings 210 and 220. The display 230 may be placed in the first housing 210 and the second housing 220 (e.g., the housing).

The display 230 in FIGS. 6A, 6B, and 6C is an example of the first display (e.g., the first display 230 in FIGS. 1A and 3) or the display module (e.g., the display module 230 in FIG. 4) described above in FIGS. 1A, 3, and 4. The display 230 in FIGS. 6A, 6B, and 6C is substantially similar to the first display 230 or the display module 230 in FIGS. 1A, 3, and 4, or may further include other embodiments of the first display 230 or the display module 230.

In one embodiment, with reference to FIGS. 5A, 5B, 6A, 6B, and 6C, the display 230 includes a display panel 430, shielding members 4720a and 4720, a digitizer panel 470, a control circuit 4321a, a reinforcing member 4324, and/or a waterproof member 483.

With reference to FIGS. 5A, 5B, 6A, 6B, and 6C, the display 230 includes a first edge E1 having a first length L1, a second edge E2 extended from the first edge E1 in a direction perpendicular to the first edge E1 (e.g., in the x-axis direction in FIGS. 5A and 5B) and having a second length L2, a third edge E3 extended from the second edge E2 in a direction parallel to the first edge E1 (e.g., in the y-axis direction in FIGS. 5A and 5B) and having the first length L1, and a fourth edge E4 extended from the third edge E3 to the first edge E1 in a direction parallel to the second edge E2 (e.g., in the x-axis direction in FIGS. 5A and 5B) and having the second length L2.

In one embodiment, the first edge E1 is formed to have a length in a direction parallel to the folding axis F (e.g., the y-axis direction in FIG. 5A). In one embodiment, the first length L1 is formed to be greater than the second length L2. In some embodiments, the first length L1 is formed to be equal to the second length L2 or smaller than the second length L2.

In one embodiment, with reference to FIGS. 6A, 6B, and 6C, the display 230 includes the display panel 430 including a first area 431 (e.g., a front surface or an active area) and a second area 432 (e.g., a rear or back surface). The first area 431 is the front surface (e.g., a surface facing the positive z-axis in FIG. 6A) of the display panel 430. The second area 432 is the rear surface (e.g., a surface facing the negative z-axis in FIG. 6A) of the display panel 430 extended from the first area 431. The second area 432 is disposed on the rear surface (e.g., a surface facing the negative z-axis in FIG. 6A) of the first area 431.

In one embodiment, with reference to FIGS. 5A, 5B, 6A, 6B, and 6C, the display 230 includes a first edge E1 having a first length L1, a second edge E2 extended from the first edge E1 in a direction perpendicular to the first edge E1 (e.g., in the x-axis direction in FIGS. 5A and 5B) and having a second length L2, a third edge E3 extended from the second edge E2 in a direction parallel to the first edge E1 (e.g., in the y-axis direction in FIGS. 5A and 5B) and having the first length L1, and a fourth edge E4 extended from the third edge E3 to the first edge E1 in a direction parallel to the second edge E2 (e.g., in the x-axis direction in FIGS. 5A and 5B) and having the second length L2.

In one embodiment, the first edge E1 is formed to have a length in a direction parallel to the folding axis F (e.g., the y-axis direction in FIG. 5A). In one embodiment, the first length L1 is formed to be greater than the second length L2. In some embodiment, the first length L1 is formed to be equal to the second length L2 or smaller than the second length L2.

In one embodiment, with reference to FIGS. 5A, 5B, 6A, 6B, and 6C, the second area 432 include a bent region bent from the first edge E1 toward the rear surface of the display 230 (e.g., in the negative z-axis direction in FIG. 6A) and a planar region extended from the bent region in a direction of the second length L2 (e.g., in the positive x-axis direction in FIGS. 5A, 5B, 6A, 6B, and 6C).

In one embodiment, the second area 432 is disposed to be extended from any one of the second edge E2, the third edge E3, or the fourth edge E4, rather than the first edge E1.

In one embodiment, with reference to FIGS. 4, 5A, 5B, 6A, 6B, and 6C, the second area 432 has an end 432a (e.g., an end facing the positive x-axis in FIG. 6A). The end 432a of the second area 432 overlaps with a flexible printed circuit board (FPCB) 4322. The end 432a of the second area 432 is electrically connected to the FPCB 4322.

In one embodiment, with reference to FIGS. 4, 5A, 5B, 6A, 6B, and 6C, the display 230 includes the control circuit 4321a disposed in the second area 432 and a plurality of electronic elements (not shown) disposed on the FPCB 4322.

In one embodiment, when the electronic device 200 is operating, an electromagnetic wave generated from the outside may cause a problem in the operation of the electronic device 200. The shielding members 4720a and 4720 can block electromagnetic interference (EMI) or interference caused by a magnetic field generated from a magnetic object so that electronic components included in the electronic device 200 can operate normally within a configured operation range. The shielding members 4720a and 4720 are formed of various materials capable of performing an EMI shielding function. The shielding members 4720a and 4720 may include, for example, a material such as metal, carbon, a conductive polymer, or a combination thereof. In one embodiment, the shielding members 4720a and 4720 may be ARS. The shielding members 4720a and 4720 may be manufactured in various forms. For example, the shielding members 4720a and 4720 may be manufactured in the form of a sheet or film.

In one embodiment, with reference to FIGS. 5B, 6A, 6B, and 6C, the shielding members 4720a and 4720 are disposed in the second area 432 of the display panel 430. The shielding members 4720a and 4720 are placed on one surface (e.g., a surface facing the positive z-axis in FIG. 6A) of the second area 432 of the display panel 430.

In one embodiment, with reference to FIGS. 5B, 6A, 6B, and 6C, the shielding members 4720a and 4720 are disposed on the rear surface (e.g., in the negative z-axis direction in FIGS. 6A, 6B, and 6C) of the first area 431 of the display panel 430. However, the shielding members 4720a and 4720 are be limited thereto, and may be placed between a plurality of layers constituting the display 230.

In one embodiment, with reference to FIGS. 5B, 6A, 6B, and 6C, the display 230 includes a first shielding member 4720a corresponding to the first magnetic member 4710a and a second shielding member 4720 corresponding to the second magnetic member 4710. In one embodiment, the first shielding member 4720a and the second shielding member 4720 cover the first magnetic member 4710a and the second magnetic member 4710, respectively.

In one embodiment, with reference to FIGS. 5B, 6A, 6B, and 6C, the shielding members 4720a and 4720 are disposed to face the magnetic members 4710 and 4710a. The first shielding member 4720a is disposed to face the first magnetic member 4710a. The second shielding member 4720 is disposed to face the second magnetic member 4710.

In one embodiment, the digitizer panel 470 that recognizes an input by the pen input device in an electromagnetic resonance (EMR) manner has pen recognition performance deteriorated by an external magnetic field. Therefore, the shielding members 4720a and 4720 capable of shielding the magnetic field are disposed between the digitizer panel 470 and any component that generates the magnetic field. For example, since components such as the magnetic members 4710a and 4710 or the sensor member of the electronic device 200 may generate the magnetic fields, the shielding members are placed between these components and the digitizer panel 470.

In one embodiment, as shown in FIGS. 6A, 6B, and 6C, the first and second shielding members 4720a and 4720 can shield the magnetic field generated by the first and second magnetic members 4710a and 4710 from being induced in the digitizer panel 470.

In one embodiment, when the magnetic field generated by the magnetic members 4710 and 4710a is induced in the digitizer panel 470, the digitizer panel 470 may be magnetized, resulting in poor recognition of the electronic pen. Since the shielding members 4720 and 4720a can shield the magnetic field generated by the magnetic members 4710 and 4710a, the digitizer panel 470 may not be magnetized by the magnetic members 4710 and 4710a.

In one embodiment, with reference to FIGS. 5A, 5B, 6A, 6B, and 6C, the control circuit 4321a is disposed in the second area 432 of the display panel 430. The control circuit 4321a is disposed on the rear surface of the display 230. In the second area 432, the control circuit 4321a is arranged to be extended along the y-axis direction in FIG. 5A.

In one embodiment, with reference to FIGS. 5A, 5B, 6A, 6B, and 6C, the control circuit 4321a is electrically connected to the FPCB 4322 in the second area 432 that is electrically connected to the second area 432.

In one embodiment, with reference to FIGS. 5A, 5B, 6A, 6B, and 6C, the reinforcing member 4324 is disposed in the second area 432 of the display panel 430. The reinforcing member 4324 is disposed on the rear surface of the display 230.

In one embodiment, with reference to FIG. 6A, the control circuit 4321a of the display 230 is disposed at a position overlapping with the support member 262 (e.g., the second support member) of the housing 220 (e.g., the second housing 220). For example, when the display 230 is viewed from the side (e.g., in the y-axis direction in FIG. 6A), the control circuit 4321a overlap with one surface of the support member 262 that supports a second battery (not shown). In this case, when the display 230 is viewed from the side (e.g., in the y-axis direction in FIG. 6A), a gap between the reinforcing member 4324 and the support member 262 is narrower than a gap between the control circuit 4321a and the support member 262. Accordingly, when an external impact is applied to the electronic device 200, the control circuit 4321a is prevented from coming into contact with the support member 262 as the reinforcing member 4324 supports the support member 262.

In one embodiment, with reference to FIG. 6A, the reinforcing member 4324 and the control circuit 4321a are arranged between the second area 432 of the display panel 430 and the support member 262 (e.g., the second support member). In one embodiment, the reinforcing member 4324 is disposed closer to the support member 262 than the control circuit 4321a.

In one embodiment, with reference to FIG. 6A, a thickness H2 of the reinforcing member 4324 is formed greater than a thickness H1 of the control circuit 4321a.

In one embodiment, with reference to FIGS. 5A, 5B, 6A, 6B, and 6A, when the display 230 is viewed from above (e.g., in the z-axis direction in FIG. 5A), the control circuit 4321a is positioned between the lateral member 223 (e.g., the second lateral member) of the housing 220 and the reinforcing member 4324.

In one embodiment, with reference to FIGS. 5A, 5B, 6A, 6B, and 6A, the control circuit 4321a is positioned between the magnetic member 4710 (e.g., the second magnetic member) and the reinforcing member 4324.

In one embodiment, with reference to FIGS. 5A, 5B, 6A, 6B, and 6A, the lateral member 223, the magnetic member 4710, the control circuit 4321a, and the reinforcing member 4324 of the housing 220 are sequentially arranged in the positive x-axis direction in FIG. 5A.

In one embodiment, with reference to FIGS. 5B, 6A, 6B, and 6A, the lateral member 223, the magnetic member 4710, the shielding member 4720 (e.g., the second shielding member 4720), the control circuit 4321a, and the reinforcing member 4324 of the second housing 220 are sequentially arranged in the positive x-axis direction in FIG. 5B.

In one embodiment, with reference to FIGS. 5A, 5B, 6A, 6B, and 6C, the reinforcing member 4324 is positioned along the end 432a of the second area 432 in the y-axis direction in FIG. 6A.

In one embodiment, with reference to FIGS. 5A, 5B, 6A, 6B, and 6A, the reinforcing member 4324 is positioned to be in close contact with at least a portion of the control circuit 4321a disposed in the second area 432.

In one embodiment, with reference to FIGS. 5A, 5B, 6A, 6B, and 6C, the reinforcing member 4324 is positioned to surround at least a portion of the control circuit 4321a. The reinforcing member 4324 is disposed to surround at least a portion of the control circuit 4321a along the end 432a of the second area 432.

In one embodiment, the reinforcing member 4324 covers at least a portion of the control circuit 4321a.

In one embodiment, with reference to FIGS. 5A and 5B, the reinforcing member 4324 includes a first portion 4324a, a first portion 4324b, and a third portion 4324c. In the following description, the reinforcing member 4324 is described as being divided into the first portion 4324a, the first portion 4324b, and the third portion 4324c, but the reinforcing member 4324 may not be physically divided. The first portion 4324a, the first portion 4324b, and the third portion 4324c may be conceptually divided for the convenience of describing the reinforcing member 4324.

In one embodiment, with reference to FIGS. 5A, 5B, 6A, 6B, and 6A, the first portion 4324a of the reinforcing member 4324 is arranged in a direction substantially parallel to the control circuit 4321a (e.g., in the y-axis direction in FIG. 5A). The first portion 4324a is arranged along the side surface of the control circuit 4321a (e.g., the surface facing the positive x-axis in FIG. 5A) in the longitudinal direction of the control circuit 4321a (e.g., in the y-axis direction in FIG. 5A). The first portion 4324a is arranged adjacent to the side surface of the control circuit 4321a (e.g., the surface facing the positive x-axis in FIG. 5A).

In one embodiment, with reference to FIGS. 5A, 5B, 6A, 6B, and 6A, the first portion 4324a of the reinforcing member 4324 is positioned to be in close contact with the control circuit 4321a.

In one embodiment, with reference to FIGS. 5A, 5B, 6A, 6B, and 5B, the second portion 4324b of the reinforcing member 4324 is a portion that extends from one end of the first portion 4324a along a first direction (e.g., the positive y-axis direction in FIG. 5A or 5B) with a first length. The third portion 4324c of the reinforcing member 4324 is a portion that extends from the other end of the first portion 4324a along a second direction (e.g., the negative y-axis direction in FIG. 5A or 5B) with a second length. The second length of the third portion 4324c is formed smaller than the first length of the first portion 4324b.

In one embodiment, with reference to FIGS. 5A, 5B, 6A, 6B, and 6A, the reinforcing member 4324 buffers an external impact transmitted to the control circuit 4321a when an external force is applied to the electronic device 200 in the x-axis direction based on FIG. 5A.

In one embodiment, with reference to FIGS. 5A, 5B, 6A, 6B, and 6A, the reinforcing member 4324 prevents moisture penetration in the positive x-axis direction in FIG. 6A to the end 432a of the second area 432 to which the FPCB 4322 is connected.

In one embodiment, the reinforcing member 4324 is a resin of epoxy, polyester, polyurethane, acrylic, and silicone series. In one embodiment, with reference to FIGS. 5A, 5B, 6A, 6B, and 6C, the reinforcing member 4324 is applied around the control circuit 4321a in a liquid form.

In one embodiment, a waterproof structure (e.g., the second waterproof structure WP2 in FIG. 3) forms at least one waterproof space (e.g., the second waterproof space 4821 in FIG. 3) between the rear surface of the display 230 and the housing 220 (e.g., the second housing 220). The waterproof space accommodates at least a portion of the second area 432 that is connected to the display panel 430 and is bent toward the rear surface of the display 230. The control circuit 4321a disposed in the second area 432 and a plurality of electronic elements (not shown) disposed on the rear surface of the display 230 are disposed in the waterproof space formed by a waterproof member 483 (e.g., the third waterproof member 483 in FIG. 3), thereby being protected from moisture and/or foreign matters flowing in from the outside of the electronic device 200.

In one embodiment, with reference to FIGS. 5A, 5B, 6A, 6B, and 6C, the waterproof member 483 is disposed in the second area 432 of the display panel 430. The waterproof member 483 is disposed on the rear surface of the display 230.

In one embodiment, with reference to FIGS. 5A, 5B, 6A, 6B, and 6A, the waterproof member 483 is disposed between the lateral member 223 of the housing 220 and the control circuit 4321a. The waterproof member 483 is disposed between the magnetic member 4710 and the control circuit 4321a.

In one embodiment, with reference to FIGS. 5A, 5B, 6A, 6B, and 6B, the waterproof member 483 is disposed between the lateral member 223 of the housing 220 and the reinforcing member 4324. The waterproof member 483 is disposed between the magnetic member 4710 and the reinforcing member 4324.

In one embodiment, with reference to FIGS. 5A, 5B, 6A, 6B, and 6C, the waterproof member 483 is disposed in a direction (e.g., in the y-axis direction in FIG. 5A) substantially parallel to the side surface (e.g., the surface facing the negative x-axis in FIG. 5A) of the control circuit 4321a.

In one embodiment, with reference to FIGS. 5A, 5B, 6A, 6B, and 6C, the waterproof member 483 is arranged to surround at least a portion of the control circuit 4321a. In one embodiment, the waterproof member 483 includes a first section 483a, a second section 483b, and a third section 483c. In the following description, the waterproof member 483 is described as being divided into the first section 483a, the second section 483b, and the third section 483c, but the waterproof member 483 may not be physically divided. The first section 483a, the second section 483b, and the third section 483c may be conceptually divided for the convenience of describing the waterproof member 483.

In one embodiment, with reference to FIGS. 5A and 5B, the first section 483a of the waterproof member 483 is arranged to correspond to the first portion 4324a of the reinforcing member 4324. The first section 483a of the waterproof member 483 is arranged in a direction (e.g., in the y-axis direction in FIG. 5A) substantially parallel to the first portion 4324a of the reinforcing member 4324.

In one embodiment, with reference to FIGS. 5A and 5B, the first section 483a of the waterproof member 483 is arranged in a direction (e.g., in the y-axis direction in FIG. 5A) substantially parallel to the control circuit 4321a. The first section 483a is arranged in the longitudinal direction (e.g., the y-axis direction in FIG. 5A) of the control circuit 4321a along the side surface (e.g., the surface facing the negative x-axis in FIG. 5A) of the control circuit 4321a. The first section 483a is arranged adjacent to the side surface (e.g., the surface facing the negative x-axis in FIG. 5A) of the control circuit 4321a.

In one embodiment, with reference to FIGS. 5A and 5B, the first section 483a of the waterproof member 483 is arranged in a direction (e.g., in the y-axis direction in FIG. 5A) substantially parallel to the control circuit 4321a and the first portion 4324a of the reinforcing member 4324. The first section 483a, the control circuit 4321a, and the first portion 4324a are arranged sequentially in the positive x-axis direction in FIG. 5A. One side surface of the control circuit 4321a (e.g., the surface facing the negative x-axis in FIG. 5A) is arranged adjacent to the first section 483a, and the other side surface of the control circuit 4321a (e.g., the surface facing the positive x-axis in FIG. 5A) is arranged adjacent to the first portion 4324a. In one embodiment, with reference to FIGS. 5A and 5B, the second section 483b of the waterproof member 483 is a section extended from one end of the first section 483a along the first direction (e.g., the positive y-axis direction in FIG. 5A or 5B).

In one embodiment, with reference to FIGS. 5A and 5B, at least a portion of the second section 483b of the waterproof member 483 is arranged to correspond to the second portion 4324b of the reinforcing member 4324. The second section 483b is arranged in a direction (e.g., in the y-axis direction in FIG. 5A) substantially parallel to the second portion 4324b. The second section 483b is arranged along the side surface of the second portion 4324b (e.g., the surface facing the negative x-axis in FIG. 5A) in a lengthwise direction of the second portion 4324b (e.g., in the y-axis direction in FIG. 5A). The second section 483b is arranged adjacent to the second portion 4324b.

In one embodiment, with reference to FIGS. 5A and 5B, the third section 483c of the waterproof member 483 is a section extended from the first section 483a in the second direction (e.g., the negative y-axis direction in FIG. 5A or 5B).

In one embodiment, with reference to FIGS. 5A and 5B, at least a portion of the third section 483c of the waterproof member 483 is arranged to correspond to the third portion 4324c of the reinforcing member 4324. The third section 483c is arranged adjacent to the third portion 4324c.

In one embodiment, with reference to FIGS. 5A, 5B, 6A, 6B, and 6C, when the display 230 is viewed from above (e.g., in the z-axis direction in FIG. 5A or 5B), the width (e.g., the length in the x-axis direction in FIG. 5A) of the first section 483a of the waterproof member 483 is formed greater than the width of the second section 483b and the width of the third section 483c.

In one embodiment, the first section 483a of the waterproof member 483 buffers an external impact transmitted to the control circuit 4321a when an external force is applied to the electronic device 200 in the x-axis direction based on FIG. 5A.

In one embodiment, with reference to FIGS. 5A, 5B, 6A, 6B, and 6C, when the display 230 is viewed from above (e.g., in the z-axis direction in FIG. 5A), the waterproof member 483 is disposed spaced apart from the end 432a of the second area 432. The distance W3 between the waterproof member 483 and the end 432a of the second area 432 is formed to be smaller than the combination of the width W1 of the control circuit 4321a and the width W2 of the reinforcing member 4324.

In one embodiment, with reference to FIGS. 5A, 5B, 6A, 6B, and 6C, the buffer member 2000 is disposed on the support member 262 (e.g., the second support member) of the housing 220 (e.g., the second housing). The buffer member 2000 is disposed on one surface of the support member 262 (e.g., the surface facing the positive z-axis in FIG. 6A). The buffer member 2000 is disposed on the rear surface of the display 230.

In one embodiment, with reference to FIGS. 5A, 5B, 6A, 6B, and 6C, the buffer member 2000 is disposed between the display 230 and the support member 262 to cushion impact applied to the display 230.

In one embodiment, with reference to FIGS. 5A, 5B, 6A, 6B, and 6C, the control circuit 4321a is disposed between the lateral member 223 of the housing 220 and the buffer member 2000. The control circuit 4321a is disposed between the magnetic member 4710 and the buffer member 2000.

In one embodiment, with reference to FIGS. 5A, 5B, 6A, 6B, and 6C, the waterproof member 483 is disposed between the lateral member 223 of the housing 220 and the buffer member 2000. The waterproof member 483 is disposed between the magnetic member 4710 and the buffer member 2000.

In one embodiment, with reference to FIGS. 5A, 5B, 6A, 6B, and 6C, the buffer member 2000 is disposed in a direction (e.g., in the y-axis direction in FIG. 5A) substantially parallel with the side surface (e.g., the surface facing the positive x-axis in FIG. 5A) of the reinforcing member 4324. The buffer member 2000 is disposed along the side surface (e.g., the surface facing the positive x-axis in FIG. 5A) of the reinforcing member 4324 in the longitudinal direction (e.g., in the y-axis direction in FIG. 5A) of the reinforcing member 4324. The buffer member 2000 is disposed adjacent to the side surface (e.g., the surface facing the positive x-axis in FIG. 5A) of the reinforcing member 4324.

In one embodiment, with reference to FIGS. 5A, 5B, 6A, 6B, and 6C, the buffer member 2000 is arranged in a direction (e.g., the y-axis direction in FIG. 5A) substantially parallel to the first section 483a of the waterproof member 483, the control circuit 4321a, and the first portion 4324a of the reinforcing member 4324. The first section 483a, the control circuit 4321a, the first portion 4324a, and the buffer member 2000 are arranged sequentially in the positive x-axis direction in FIG. 5A. One side surface (e.g., the surface facing the negative x-axis in FIG. 5A) of the reinforcing member 4324 is positioned adjacent to the control circuit 4321a, and the other side surface (e.g., the surface facing the positive x-axis in FIG. 5A) of the reinforcing member 4324 is positioned adjacent to the buffer member 2000.

In one embodiment, with reference to FIGS. 5A, 5B, 6A, 6B, and 6C, the buffer member 2000 may include a protrusion 2000a. The protrusion 2000a is formed as a part of the buffer member 2000.

In one embodiment, with reference to FIGS. 5A, 5B, 6A, 6B, and 6C, the protrusion 2000a is disposed in a direction (e.g., in the y-axis direction in FIG. 5A) substantially parallel to the third portion 483c of the waterproof member 483. The protrusion 2000a is arranged along the side surface (e.g., the surface facing the positive x-axis in FIG. 5A) of the third portion 483c in the longitudinal direction (e.g., in the y-axis direction in FIG. 5A) of the third portion 483c. The protrusion 2000a is positioned adjacent to the third portion 483c.

In one embodiment, with reference to FIGS. 5A, 5B, 6A, 6B, and 6C, the protrusion 2000a is formed in a shape that protrudes in the third direction (e.g., the negative x-axis direction in FIG. 5A) from a portion of the buffer member 2000.

In one embodiment, the third portion 4324c of the reinforcing member 4324 is formed shorter than the first portion 4324b, and a separate member (e.g., the reinforcing member) may not be disposed in an area located in the second direction (e.g., the negative y-axis direction in FIG. 5A or 5B) with respect to the third portion 4324c. In this case, when an external impact is applied to the electronic device 200 in the x-axis direction in FIG. 5A, the external impact is applied to an empty space located in the second direction (e.g., the negative y-axis direction in FIG. 5A or 5B) with respect to the third portion 4324c.

In one embodiment, the protrusion 2000a buffers an external impact when the external impact is applied to the electronic device 200 in the x-axis direction in FIG. 5A, as it is positioned in the negative y-axis direction in FIG. 5A with respect to the third portion 4324c of the reinforcing member 4324.

In one embodiment, the buffering member 2000 includes a non-metallic thin plate material, such as fiber reinforced plastics (FRP) (e.g., carbon fiber reinforced plastics (CFRP) or glass fiber reinforced plastics (GFRP)) having a rigid characteristic for buffering an external impact.

In the above description, the electronic device 200 is described as a foldable electronic device that can be folded through the hinge devices 400 and 400-1, but it may not be limited thereto. For example, the above description of the second area 432 of the display 230, the reinforcing member 4324, the buffer member 2000, and the waterproof member 483 may be applied to a bar-shaped electronic device. Unlike the electronic device 200 of FIG. 1A, the bar-shaped electronic device 200 may be an electronic device that includes one housing instead of multiple housings 210 and 220.

An electronic device 200 according to one embodiment of the present disclosure may include a housing 220 including a lateral member 223 and a support member 262 extended from the lateral member 223.

In one embodiment, the electronic device 200 may include a display 230 disposed in the housing 220.

In one embodiment, the display 230 may include a display panel 430.

In one embodiment, the display panel of the display 230 may include a first area 431 and a second area 432 disposed on a rear surface of the first area 431 and including an end 432a overlapping with a flexible printed circuit board 4322.

In one embodiment, the display 230 may include a control circuit 4321a disposed in the second area 432.

In one embodiment, the display 230 may include a reinforcing member 4324 disposed along the end 432a of the second area 432 and arranged to surround at least a portion of the control circuit 4321a.

In one embodiment, the display 230 may include a waterproof member 483 disposed in the second area 432.

In one embodiment, at least a portion of the waterproof member 483 may be spaced apart from the end 432a of the second area 432 by a distance W3 smaller than a combination of a width W1 of the control circuit 4321a and a width W2 of the reinforcing member 4324.

In one embodiment, the reinforcing member 4324 may include a first portion 4324a arranged parallel to the control circuit 4321a.

In one embodiment, the reinforcing member 4324 may include a first portion 4324b extended from one end of the first portion 4324a along a first direction by a first length.

In one embodiment, the reinforcing member 4324 may include a third portion 4324c extended from the other end of the first portion 4324a along a second direction opposite to the first direction by a second length.

In one embodiment, the second length of the third portion 4324c may be formed smaller than the first length of the second portion 4324b.

In one embodiment, the electronic device 200 may further include a buffer member 2000 disposed on the support member 262.

In one embodiment, the buffer member 2000 may include a protrusion 2000a adjacent to the third portion 4324c of the reinforcing member 4324 and protruding in a third direction perpendicular to the first direction.

In one embodiment, a thickness H2 of the reinforcing member 4324 may be greater than a thickness H1 of the control circuit 4321a.

In one embodiment, the waterproof member 483 may include a first section 483a corresponding to the first portion 4324a of the reinforcing member 4324.

In one embodiment, the waterproof member 483 may include a second section 483b extended along the first direction from the first section 483a and at least a portion of which corresponds to the second portion 4324b of the reinforcing member 4324.

In one embodiment, the waterproof member 483 may include a third section 483c extended along the second direction from the first section 483a and at least a portion of which corresponds to the third portion 4324c of the reinforcing member 4324.

In one embodiment, the first section 483a of the waterproof member 483 may be formed with a larger width than the second section 483b of the waterproof member and the third section 483c of the waterproof member.

In one embodiment, the electronic device 200 may include at least one magnetic member 4710 arranged on the support member 262.

In one embodiment, the display 230 may include a shielding member 4720 arranged on the second area 432 and facing the at least one magnetic member 4710.

In one embodiment, the third section 483c of the waterproof member 483 may be arranged to pass between the shielding member 4720 and the third portion 4324c of the reinforcing member 4324.

In one embodiment, the third section 483c of the waterproof member 483 may be arranged so as not to overlap with the shielding member 4720.

In one embodiment, the display 230 may include a digitizer panel 470 arranged on the second area 432.

In one embodiment, the shielding member 4720 may be positioned between the at least one magnetic member 4710 and the digitizer panel 470.

In one embodiment, the shielding member 4720 can shield a magnetic force of the at least one magnetic member 4710.

In one embodiment, the reinforcing member 4324 may be formed of a resin material.

In one embodiment, the buffer member 2000 may be formed of an elastic material.

In one embodiment, the electronic device 200 may include a first housing 210 including a first lateral member 213 and a first support member 261 extended from the first lateral member 213 into an internal space.

In one embodiment, the electronic device 200 may include the housing 220 including the lateral member 223 and the support member 262 extended from the lateral member 262 into the internal space.

In one embodiment, the electronic device 200 may include a hinge device 440, 440-1 that rotatably connects the first housing 210 and the housing 220 about a folding axis.

In one embodiment, the electronic device 200 may include a display 230 disposed in the first housing 210 and the housing 220.

In one embodiment, the electronic device 200 may include at least one first magnetic member 4710a disposed on the first support member of the first housing 210.

In one embodiment, the electronic device 200 may include at least one second magnetic member 4710 disposed on the support member 262 of the housing 220.

In one embodiment, the at least one second magnetic member 4710 may be arranged to face at least a portion of the at least one first magnetic member 4710a when the electronic device 200 is in a folded state relative to a folding axis.

In one embodiment, the display 230 may include a first shielding member 4720a facing the at least one first magnetic member 4710a and disposed in the second area 432.

In one embodiment, the display 230 may include a second shielding member 4720 facing the at least one second magnetic member 4710 and disposed in the second area 432.

In one embodiment, the display 230 may include a digitizer panel 470 disposed in the second area 432.

In one embodiment, the first shielding member 4720a may be positioned between the at least one first magnetic member 4710a and the digitizer panel 470.

In one embodiment, the second shielding member 4720 may be positioned between the at least one second magnetic member 4710 and the digitizer panel 470.

In one embodiment, an electronic device 200 may include a first housing 210 including a first lateral member 213 and a first support member 261 extended from the first lateral member 213 into an internal space.

In one embodiment, the electronic device 200 may include a second housing 220 including a second lateral member 223 and a second support member 262 extended from the second lateral member 223 into the internal space.

In one embodiment, the electronic device 200 may include a hinge device 400, 400-1 that rotatably connects the first housing 210 and the second housing 220 about a folding axis.

In one embodiment, the electronic device 200 may include a display 230 disposed in the first housing 210 and the second housing 220.

In one embodiment, the display 230 may include a display panel 430.

In one embodiment, the display panel 430 may include a first area 431 and a second area 432 disposed on a rear surface of the first area 431 and including an end 432a overlapping with a flexible printed circuit board 4322.

In one embodiment, the display 230 may include a control circuit 4321a disposed in the second area 432.

In one embodiment, the display 230 may include a reinforcing member 4324 disposed along the end 432a of the second area 432 and arranged to surround at least a portion of the control circuit 4321a.

In one embodiment, the display 230 may include a waterproof member 483 disposed in the second area 432.

In one embodiment, at least a portion of the waterproof member 483 may be spaced apart from the end 432a of the second area 432 by a distance W3 smaller than a combination of a width W1 of the control circuit 4321a and a width W2 of the reinforcing member 4324.

In one embodiment, the reinforcing member 4324 may include a first portion 4324a arranged parallel to the control circuit 4321a.

In one embodiment, the reinforcing member 4324 may include a second portion 4324b extended from one end of the first portion 4324a along a first direction by a first length.

In one embodiment, the reinforcing member 4324 may include a third portion 4324c extended from the other end of the first portion 4324a along a second direction opposite to the first direction by a second length.

In one embodiment, the second length of the third portion 4324c may be smaller than the first length of the second portion 4324b.

In one embodiment, the electronic device 200 may further include a buffer member 2000 disposed on the support member 262.

In one embodiment, the buffer member 2000 may include a protrusion 2000a adjacent to the third portion 4324c of the reinforcing member 4324 and protruding in a third direction perpendicular to the first direction.

In one embodiment, a thickness H2 of the reinforcing member 4324 may be greater than a thickness H1 of the control circuit 4321a.

In one embodiment, the waterproof member 483 may include a first section 483a corresponding to the first portion 4324a of the reinforcing member 4324.

In one embodiment, the waterproof member 483 may include a second section 483b extended along the first direction from the first section 483a and at least a portion of which corresponds to the second portion 4324b of the reinforcing member 4324.

In one embodiment, the waterproof member 483 may include a third section 483c extended along the second direction from the first section 483a and at least a portion of which corresponds to the third portion 4324c of the reinforcing member 4324.

In one embodiment, the first section 483a of the waterproof member 483 may have a larger width than the second section 483b and the third section 483c of the waterproof member 483.

In one embodiment, the electronic device 200 may include at least one first magnetic member 4710a disposed on the first support member 261 of the first housing 210.

In one embodiment, the electronic device 200 may include at least one second magnetic member 4710 disposed on the second support member 262 of the second housing 220.

In one embodiment, the at least one second magnetic member 4710 may be arranged so that at least a portion thereof faces the at least one first magnetic member 4710a when the electronic device 200 is in a folded state relative to the folding axis.

In one embodiment, the display 230 may include a first shielding member 4720a facing the at least one first magnetic member 4710a and positioned on the second area 432.

In one embodiment, the display may include a second shielding member 4720 facing the at least one second magnetic member 4710 and positioned on the second area 432.

In one embodiment, the third section 483c of the waterproof member 483 may pass between the second shielding member 4720 and the third portion 4324c of the reinforcing member 4324 and may be positioned so as not to overlap with the second shielding member 4720.

In one embodiment, the display 230 may include a digitizer panel 470 disposed in the second area 432.

In one embodiment, the first shielding member 4720a may be positioned between the at least one first magnetic member 4710a and the digitizer panel 470.

In one embodiment, the second shielding member 4720 may be positioned between the at least one second magnetic member 4710 and the digitizer panel 470.

Electronic devices according to various embodiments disclosed in this document may be various kinds of devices. The electronic devices may include, for example, mobile communication devices (e.g., smartphones), computer devices (e.g., notebooks), portable multimedia devices, portable medical devices, cameras, wearable devices, or home appliances. Electronic devices according to embodiments of this document are not limited to the above-described devices.

The embodiments of the disclosure disclosed in this specification and drawings are merely specific examples presented to easily explain the technical contents according to the embodiments of the disclosure and to help understand the embodiments of the disclosure, and are not intended to limit the scope of the embodiments of the disclosure. Therefore, the scope of the various embodiments of the disclosure should be interpreted as including all changes or modified forms derived based on the technical ideas of the various embodiments of the disclosure in addition to the embodiments disclosed herein.

## Claims

1. An electronic device (200) comprising:
a housing (220) including a lateral member (223) and a support member (262) extended from the lateral member (223); and
a display (230) disposed in the housing (220),
the display (230) including:
a display panel (430) including a first area (431) and a second area (432), the second area (432) being extended from the first area (431), disposed on a rear surface of the first area (431), and having an end (432a) overlapping with a flexible printed circuit board, FPCB, (4322),
a control circuit (4321a) disposed in the second area (432),
a reinforcing member (4324) disposed along the end (432a) of the second area (432) and arranged to surround at least a portion of the control circuit (4321a), and
a waterproof member (483) disposed in the second area (432),
wherein at least a portion of the waterproof member (483) is spaced apart from the end (432a) of the second area (432) by a distance (W3) smaller than a combination of a width (W1) of the control circuit (4321a) and a width (W2) of the reinforcing member (4324).

2. The electronic device of claim 1, wherein the reinforcing member (4324) includes:
a first portion (4324a) arranged parallel to the control circuit (4321a),
a second portion (4324b) extended from one end of the first portion (4324a) along a first direction by a first length, and
a third portion (4324c) extended from the other end of the first portion (4324a) along a second direction opposite to the first direction by a second length smaller than the first length.

3. The electronic device of claim 2, further comprising:
a buffer member (2000) disposed on the support member (262),
wherein the buffer member (2000) includes a protrusion (2000a) adjacent to the third portion (4324c) of the reinforcing member (4324) and protruding in a third direction perpendicular to the first direction.

4. The electronic device of claim 1, wherein a thickness (H2) of the reinforcing member (4324) is greater than a thickness (H1) of the control circuit (4321a).

5. The electronic device of claim 2, wherein the waterproof member (483) includes:
a first section (483a) corresponding to the first portion (4324a) of the reinforcing member (4324),
a second section (483b) extended along the first direction from the first section (483a) and at least a portion of which corresponds to the second portion(4324b) of the reinforcing member (4324), and
a third section (483c) extended along the second direction from the first section (483a) and at least a portion of which corresponds to the third portion (4324c) of the reinforcing member (4324).

6. The electronic device of claim 5, wherein the first section (483a) of the waterproof member (483) is formed with a larger width than the second section (483b) of the waterproof member (483) and the third section (483c) of the waterproof member (483).

7. The electronic device of claim 5, further comprising:
at least one magnetic member (4710) disposed on the support member (262),
wherein the display (230) includes a shielding member (4720) facing the at least one magnetic member (4710) and disposed in the second area (432).

8. The electronic device of claim 7, wherein the third section (483c) of the waterproof member (483) passes between the shielding member (4720) and the third portion (4324c) of the reinforcing member (4324), and does not overlap with the shielding member (4720).

9. The electronic device of claim 7, wherein the display (230) includes a digitizer panel (470) disposed in the second area (432), and
the shielding member (4720) is positioned between the at least one magnetic member (4710) and the digitizer panel (470).

10. The electronic device of claim 7, wherein the shielding member (4720) shields a magnetic force of the at least one magnetic member (4710).

11. The electronic device of claim 1, wherein the reinforcing member (4324) is formed of a resin material.

12. The electronic device of claim 1, wherein the buffer member (2000) is formed of an elastic material.

13. The electronic device of claim 1, further comprising:
a first housing (210) including a first lateral member (213) and a first support member (261) extended from the first lateral member (213) into an internal space;
the housing (220) including the lateral member (223) and the support member (262) extended from the lateral member (223) into the internal space;
a hinge device (400, 400-1) that rotatably connects the first housing (210) and the housing (220) about a folding axis; and
a display (230) disposed in the first housing (210) and the housing (220).

14. The electronic device of claim 13, further comprising:
at least one first magnetic member (4710a) disposed on the first support member (261) of the first housing (210); and
at least one second magnetic member (4710) disposed on the support member (262) of the housing (220), at least a portion of which faces the at least one first magnetic member (4710a) when the electronic device is in a folded state relative to a folding axis,
wherein the display (230) includes:
a first shielding member (4720a) facing the at least one first magnetic member (4710a) and disposed in the second area (432), and
a second shielding member (4720) facing the at least one second magnetic member (4710) and disposed in the second area (432).

15. **16.** The electronic device of claim 14, wherein the display (230) includes a digitizer panel (470) disposed in the second area (432),
the first shielding member (4720a) is positioned between the at least one first magnetic member (4710a) and the digitizer panel (470), and
the second shielding member (4720) is positioned between the at least one second magnetic member (4710) and the digitizer panel (470).
